# EUROPÄISCHE PATENTSCHRIFT

(11) **EP 4 476 128 B1**
(45) Veröffentlichungstag und Bekanntmachung des Hinweises auf die Patenterteilung: **29.10.2025**
(21) Anmeldenummer: 23704285.8
(22) Anmeldetag: 06.02.2023
(51) Int. Cl.: B62K 1/00, B62K 11/00

(54) **FAHRZEUG FÜR EINEN FAHRER MIT EINER AUF EINEM BODEN ABROLLENDEN KUGEL**
VEHICLE FOR ONE RIDER, HAVING A BALL ROLLING ON THE GROUND
VÉHICULE POUR UN UTILISATEUR AYANT UN ROULEMENT À BILLES SUR LE SOL

(30) Priorität: 08.02.2022 DE 102022102908
(43) Veröffentlichungstag der Anmeldung: 18.12.2024
(73) Patentinhaber: INNOVATED TRANSPORT SYSTEMS UG (HAFTUNGSBESCHRÄNKT), 45130 Essen (DE)
(72) Erfinder: SAMBETH, Ulrich, 45149 Essen (DE)
(74) Vertreter: Moser Götze & Partner Patentanwälte mbB
(86) Internationale Anmeldenummer: PCT/EP2023/052830
(87) Internationale Veröffentlichungsnummer: WO 2023/152085

(56) Entgegenhaltungen:
- WO-A1-2018/003886
- NL-C2- 1 033 676
- US-A- 3 604 726
- US-B2- 8 308 604

## Beschreibung

Die Erfindung betrifft ein Fahrzeug für die Fortbewegung eines Fahrers mit einer auf einem Boden abrollenden Kugel, mit einem sich auf der Kugel labil abstützenden Tragelement, auf dem der Fahrer im Betrieb des Fahrzeuges balancierend steht, mit einer sich an dem Tragelement abstützenden Antriebsanordnung, die die Kugel antreibt, und mit einer Steuerung, über die die Antriebsanordnung in Abhängigkeit von der Neigung des Tragelements und der Neigungsrichtung des Tragelements in einer gewünschten Fahrtrichtung steuerbar ist.

Aus der europäischen Patentschrift EP 3 043 877 B1 ist bereits ein Fahrzeug für die Fortbewegung eines Fahrers, insbesondere ein skateboardartiger Kugelroller, bekannt. Das Fahrzeug besteht im Wesentlichen aus einer auf einem Boden abrollenden Kugel, einem sich auf der Kugel abstützenden Tragelement mit zwei Aufstandsflächen für je einen Fuß des Fahrers, einer Antriebsanordnung und einer Steuerung. Die Antriebsanordnung ist in einer Ausführungsform im Wesentlichen aus insgesamt vier Allseitenrädern aufgebaut, von denen drei zu einer Gruppe zusammengefasst sind und auf der oberen Hälfte der Kugel abrollen und von denen das vierte entlang eines Äquators der Kugel abrollt. Alle Allseitenräder stehen jeweils ohne einen Kippwinkel auf der Oberfläche der Kugel, so dass bei einem horizontal ausgerichteten Tragelement die jeweiligen Drehachsen der drei Allseitenräder der Gruppe horizontal sind und die Drehachse des vierten Allseitenrades vertikal ausgerichtet ist. Das Tragelement wird überwiegend über die Gruppe der drei Allseitenräder auf der Kugel abgestützt. Mit Hilfe des vierten Allseitenrades kann das Tragelement um eine Hochachse der Kugel gedreht werden. Die Kugel kann somit unter beziehungsweise in dem Tragelement, das sich auf Höhe eines Äquators der Kugel befindet, in alle Richtungen auf dem Boden abrollen. Neben der Stützfunktion übernehmen alle Allseitenräder eine Antriebsfunktion. Hierzu werden die Allseitenräder jeweils über elektrische Motoren und vorgeschaltete Getriebe angetrieben, die an dem Tragelement gelagert sind. Zur Verwendung des Fahrzeugs, das auch als Sportgerät, Freizeitgerät oder Fungerät bezeichnet werden kann, steht der Fahrer frei balancierend auf dem Tragelement und steuert, bremst und lenkt das Fahrzeug über Gewichtsverlagerung. Hierbei wird der Fahrer von der Steuerung unterstützt, die unter anderem ein Balance-Steuerungsmodul umfasst, das dem Fahrer bei der Ausbalancierung des Tragelements in einer horizontalen Lage hilft. Die Bewegungsrichtung des Fahrzeugs und somit die Abrollrichtung der Kugel wird über die Neigung des Trageelements angesteuert, die über eine Gewichtsverlagerung des Fahrers hervorgerufen wird. Die gemessenen Beschleunigungs- und Winkeldaten des Tragelements werden in der Steuerung verarbeitet, darauf basierend werden die anzutreibenden Motoren der jeweiligen Allseitenräder bestimmt und mit der erforderlichen Drehrichtung und Drehgeschwindigkeit eine gewünschte Fahrtbewegung und die Balance-Lage erreicht. Das Fahrzeug ist mit drei wiederaufladbaren Batterien für die Motoren und die Steuerung ausgestattet, die auf der unteren Seite des Trageelements um die Kugel herum angeordnet sind.

Die weitere europäische Patentschrift EP 3 378 540 B1 offenbart ein vergleichbares Fahrzeug mit einer Kugel, einem Tragelement und einer Gruppe von drei angetriebenen Allseitenrädern. Auch diese drei Allseitenräder rollen auf der oberen Hälfte der Kugel ab und deren Drehachsen sind in unterschiedliche Richtungen ausgerichtet. Zusätzlich weist das Fahrzeug auf dem Tragelement einen mittig platzierten Haltegriff auf, an welchen sich der Fahrer festhalten kann. Zusätzlich ist am oberen Ende des Haltegriffs ein Steuermittel angeordnet, das als Steuerknüppel, Joystick oder Schaltwippe ausgeführt ist, über das eine sogenannte Vorausrichtung des Fahrzeugs eingestellt werden kann. Über das Steuermittel kann die Vorausrichtung des Fahrzeugs so eingestellt werden, dass diese der gewünschten Fahrtrichtung entspricht und somit der Fahrer ohne Drehen des Kopfes in Fahrtrichtung schaut.

Ein sogenannter dynamisch balancierender Ballscooter zum Personentransport ist aus der niederländischen Patentschrift NL 1033676 C2 bekannt, der eine Fortbewegung eines Fahrers mittels einer mit Druckluft gefüllten Kugel ermöglicht. Auch dieser Ballscooter weist eine Haltestange mit einem Lenkergriff für den Fahrer auf. Der Fahrer steht dabei auf einem Trageelement, das über der Kugel angeordnet ist. Die Kugel wird über insgesamt drei Paare von Allseitenrädern angetrieben, die jeweils mit einem Anklappwinkel an die Oberfläche der Kugel angeklappt sind. Zwei Paare rollen auf der oberen Hälfte der Kugel ab und das dritte Paar gegenüberliegend an der unteren Hälfte der Kugel.

Die koreanische Patentschrift KR 10-1269628 B1 offenbart einen weiteren tragbaren Ballscooter zum Personentransport, mit einer Kugel, die sich auf einem als Platte ausgebildeten Tragelement abstützt, und einer Haltestange mit Lenkergriff. Das Trageelement weist eine mittig platzierte Öffnung auf, durch die nur ein kleiner Teil der oberen Hälfte der Kugel nach oben herausragt. Die Kugel wird über vier mit vorgeschalteten Getrieben ausgestatteten Antriebsmotoren mit Antriebsrollen, die sich jeweils an dem Tragelement abstützen, angetrieben. Die Antriebsrollen sind an die Oberfläche der Kugel ohne einen Kippwinkel, mit einer vertikalen Abrollrichtung und in Höhe des Äquators angestellt. In Umfangsrichtung der Kugel gesehen sind die jeweils benachbarten Antriebsrollen gleichmäßig voneinander beabstandet. Die Drehachsen der Antriebsrollen sind jeweils bei horizontal ausgerichtetem Trageelement horizontal ausgerichtet. Außerdem ist jedem Antriebsrad eine Hilfskugel zugeordnet, die ausgehend von der Kugel über die jeweilige Antriebsrolle nach außen versetzt angeordnet ist und ein Umkippen des Ballscooters verhindern soll. Die Möglichkeit einer Drehbewegung des Tragelements um eine Hochachse mittels der Antriebsmotoren ist nicht beschrieben.

Eine vergleichbare Anordnung von Allseitenrädern in Bezug auf einen Antrieb einer Kugel eines fahrenden Roboters ist aus der amerikanischen Patentschrift US 8 308 604 B2 bekannt. Die vier Allseitenräder greifen an der oberen Hälfte der Kugel in einer gemeinsamen Höhe, jeweils ohne einen Kippwinkel und mit horizontalen Drehachsen an. In Umfangsrichtung der Kugel gesehen sind die jeweils benachbarten Allseitenräder gleichmäßig voneinander beabstandet.

Des Weiteren ist aus der internationalen Offenlegungsschrift WO 2020 110 651 A1 eine Antriebsanordnung mit drei auf einem Boden abrollenden Kugeln bekannt. Die Kugeln sind in den Eckpunkten eines gedachten Dreiecks angeordnet und werden über drei Antriebsräder angetrieben. Hierbei stehen die Antriebsräder jeweils mit zwei benachbarten Kugeln im Eingriff.

Ferner offenbart die amerikanische Patentschrift US 10 189 342 B2 bereits einen auf einer einzigen Kugel balancierenden Roboter. Die Kugel wird über drei entlang des Umfangs der Kugel verteilte Antriebsräder angetrieben.

Außerdem ist bereits aus der amerikanischen Patentschrift US 3 604 726 ein nicht angetriebener Balancierring zum Trainieren der Balance eines Benutzers bekannt. Der Balancierring besteht in Wesentlichen aus einem ringförmigen Tragelement für den Benutzer und einer zentral angeordneten Kugel. Das Tragelement stützt sich rollend oder gleitend auf der Kugel ab.

Auch offenbart die internationale Offenlegungsschrift WO 2018/003886 A1 bereits einen Personenfahrstuhl, der über eine auf einem Boden abrollende große Kugel angetrieben wird. Der Personenfahrstuhl weist einen Sitz und einen Lenker auf und ist über drei oder vier Allseitenräder auf der Kugel abgestützt. Über diese Allseitenräder wird die Kugel angetrieben. Außerdem sind in Fahrtrichtung gesehen vorne und hinten sowie unterhalb eines Äquators der Kugel zwei weitere nicht angetriebene Allseitenräder vorgesehen, die die Kugel führen.

Hiervon ausgehend liegt der vorliegenden Erfindung die Aufgabe zu Grunde, ein verbessertes kompaktes Fahrzeug für die Fortbewegung eines Fahrers mit einer auf einem Boden abrollenden Kugel zu einer uneingeschränkten Beweglichkeit in alle Richtungen zu schaffen.

Diese Aufgabe wird durch ein Fahrzeug für die Fortbewegung eines Fahrers mit einer auf einem Boden abrollenden Kugel mit den Merkmalen des Anspruches 1 gelöst. Vorteilhafte Ausgestaltungen der Erfindung sind in den Ansprüchen 2 bis 15 angegeben.

Erfindungsgemäß wird ein besonders kompaktes Fahrzeug für die Fortbewegung eines Fahrers mit einer auf einem Boden abrollenden Kugel, mit einem sich auf der Kugel labil abstützenden Tragelement, auf dem der Fahrer im Betrieb des Fahrzeuges balancierend steht, mit einer sich an dem Tragelement abstützenden Antriebsanordnung, die die Kugel antreibt, und mit einer Steuerung, über die die Antriebsanordnung in Abhängigkeit von der Neigung des Tragelements und der Neigungsrichtung des Tragelements in einer gewünschten Fahrtrichtung steuerbar ist, dadurch geschaffen, dass die Antriebsanordnung vier Allseitenräder umfasst, von denen mindestens zwei Allseitenräder einen Kippwinkel aufweisen, der ungleich Null ist und dass ein Erhebungswinkel zwischen einer von dem Mittelpunkt der Kugel durch eine Drehachse der jeweiligen Allseitenräder verlaufenden Linie und dem Äquator der Kugel zwischen -20 und +65 Grad liegt. In Zusammenhang mit der vorliegenden Erfindung wird unter einem Kippwinkel verstanden, dass ein tangential auf der Oberfläche aufstehendes beziehungsweise anliegendes Allseitenrad in Bezug auf eine gedachte Abrollrichtung der Kugel nach rechts oder links um einen Kippwinkel gekippt ist. Das Allseitenrad kann somit neben seiner Antriebskraft in Abrollrichtung der Kugel auch eine seitliche Antriebskomponente auf die Kugel aufbringen, die für ein Drehen des Tragelements um eine Hochachse der Kugel in Rechts- und Linksrichtung sowie zur Stabilisierung in Drehrichtung um die Hochachse verwendet werden kann. Hierfür sind mindestens zwei der Allseitenräder gleichläufig gekippt, um beide Drehrichtungen des Tragelements um die Hochachse der Kugel unabhängig von der jeweiligen Abrollrichtung der Kugel erreichen zu können. Hieraus ergibt sich unmittelbar, dass gleichläufig ausgehend von einer bei horizontalem Tragelement gesehenen vertikalen Bezugsachse mit einem positiven oder einem negativen Kippwinkel gleichzusetzen ist. Hierbei wird jeweils ein einzelnes Allseitenrad in Richtung der Kugelmitte betrachtet. Der Kippwinkel könnte somit auch als Lenkwinkel bezeichnet werden. Die vier Allseitenräder gemeinsam mit dem erfindungsgemäßen Kippwinkel ermöglichen, dass das Fahrzeug über die Antriebsanordnung von einem frei auf dem Tragelement balancierend stehenden Fahrer in beliebige Fahrrichtungen, ohne Einsatz einer Haltestange, mit oder ohne Lenkerstange bewegbar und um die eigene Hochachse drehbar ist. In diesem Zusammenhang ist in beliebige Fahrtrichtungen bewegbar so zu verstehen, dass die Fahrtrichtung, beispielsweise eine Vorwärtsfahrtrichtung des Fahrzeugs, von der Blickrichtung beziehungsweise der Brustrichtung des Fahrers entkoppelt ist, d.h. der Fahrer kann in Bezug auf seine Brustrichtung auch schräg in Vorwärtsfahrtrichtung fahren.

Das Fahrzeug wird ausschließlich über die Füße des auf dem Tragelement frei balancierenden Fahrers gesteuert. Durch eine Gewichtsverlagerung initiiert der Fahrer die Bewegung des Fahrzeuges. Dabei reagiert die Steuerung auf die Änderung eines Neigungswinkels des Tragelements und treibt die Kugel über die Antriebsanordnung an, in die gewünschte Richtung abzurollen. Somit gleicht die Steuerung die gemessene Neigung des Tragelements aus, sodass es sich wieder in einer vorzugsweise horizontalen Ausrichtung befindet. Vorzugsweise steht der Fahrer einfach im Bereich der Aufstandsflächen auf dem Tragelement, die mit Anti-Rutsch-Auflagen für einen festen und sicheren Stand des Fahrers sowie eine bessere Koordination der Gewichtsverlagerung versehen sind.

Besonders vorteilhaft ist vorgesehen, dass der Kippwinkel relativ zu der Hochachse der Kugel zwischen -45 und +45 Grad (0 Grad ausgeschlossen, vorzugsweise 2 bis -2 Grad ausgeschlossen) und vorzugsweise im Bereich von - 5 bis -15 und + 5 bis + 15 Grad (0 Grad ausgeschlossen, vorzugsweise 2 bis -2 Grad ausgeschlossen) liegt. Hierdurch wird eine gute Drehbarkeit der Kugel um die Hochachse bei gleichzeitig guter Aufbringung der Antriebskräfte auf die Oberfläche der Kugel für alle Fahrbewegungen erreicht. Dem Merkmal der Gleichsinnigkeit folgend weisen die Kippwinkel der mindestens zwei Allseitenräder auch das gleiche Vorzeichen auf.

Besonders vorteilhaft ist vorgesehen, dass die Kippwinkel von zwei gegenüberliegenden Allseitenräder gleichläufig sind. Hierdurch wird eine gute Übertragung der Antriebskräfte für die Drehung um die Hochachse erreicht.

Eine zuverlässige Drehbarkeit der Kugel um die Hochachse wird erreicht, wenn alle Allseitenräder um einen Kippwinkel gekippt sind und die Kippwinkel der gegenüberliegenden Allseitenräder gleichläufig und die Kippwinkel der benachbarten Allseitenräder gegenläufig sind. Als gegenüberliegend sind dabei die Allseitenränder, die sich bei einer Draufsicht auf die Kugel relativ zu einer über den Mittelpunkt der Kugel verlaufende Linie auf den entgegengesetzten Seiten befinden.

Außerdem ist alternativ vorgesehen, dass alle Allseitenräder um einen Kippwinkel gekippt sind und die Kippwinkel der sowohl benachbarten als auch gegenüberliegenden Allseitenräder gleichläufig sind.

Vorteilhafter Weise ist das Fahrzeug so ausgebildet, dass die Allseitenräder relativ zu der Längsachse der Kugel um einen Anklappwinkel angeklappt sind, wobei der Anklappwinkel zwischen -110 und +110 Grad, vorzugsweise zwischen 0 und 45 Grad liegt. Dadurch wird eine besonders kompakte Bauweise des Fahrzeugs erreicht.

Eine optimale Anordnung der Allseitenräder relativ zu der Hochachse der Kugel wird dadurch erreicht, dass ein Abstandswinkel zwischen den Allseitenrädern zwischen 80 und 110 Grad, vorzugsweise bei 90 Grad, liegt. Hierdurch können die Antriebskräfte besonders gut in die Kugel eingeleitet werden. In diesem Zusammenhang und mit dem Abstandswinkel von 90 Grad ist es besonders vorteilhaft, wenn die Vorwärtsfahrtrichtung des Fahrzeugs zwischen zwei Allseitenrädern bei 45 Grad liegt und in üblicher Weise die Kugelmitte schneidet.

Außerdem ist vorgesehen, dass ein Erhebungswinkel zwischen einer von dem Mittelpunkt der Kugel durch eine Drehachse der jeweiligen Allseitenräder verlaufenden Linie und dem Äquator der Kugel zwischen 0 und 45 Grad, bevorzugt bei 0 Grad, liegt. Die Einstellung des Erhebungswinkels beeinflusst das Fahr- und Neigungsverhalten des Fahrzeugs. Je größer der Erhebungswinkel, desto größer ist der Neigungswinkel des Tragelements. Mit dem größeren Neigungswinkel des Tragelements lassen sich die Fahrtrichtung und die Geschwindigkeit schneller ändern.

In Zusammenhang mit dem vorbeschriebenen Kippwinkeln, Anklappwinkeln und Erhebungswinkeln und den hierzu angegebenen Bereichen wird darauf hingewiesen, dass diese jeweils bezogen auf die Kippwinkel, Anklappwinkel und Erhebungswinkel zwar bevorzugt absolut den gleichen Zahlenwert aufweisen aber durchaus auch voneinander verschieden sein können.

Besonders vorteilhaft ist vorgesehen, dass das Tragelement die Form der Kugel mit einem größeren Durchmesser wiederholt. Die sphärische Ausführung des Tragelements ermöglicht eine kompakte Bauform.

Vorteilhafter Weise ist das Tragelement so ausgebildet, dass es einen Deckelteil, zwei Aufstandsteile und einen Ringteil umfasst, der Deckelteil den oberen Teil der Kugel abdeckt und der untere Teil der Kugel nach unten aus dem Ringteil hinausragt. Der Deckelteil deckt den oberen Teil der Kugel ab und schützt somit den Fahrer vor Berührungen mit der rotierenden Kugel beim Fahren. Die Aufstandsteile bieten dem Fahrer eine ausreichende Standfläche, die mit einem etwas höher ausgebildeten Rand einen sicheren Stand gewährleistet. Der Ringteil dient einer Stabilisierung der Aufstandsfläche und schützt außerdem die Komponente der Antriebsanordnung vor Verschmutzung sowie die Füße des Fahrers vor einem möglichen Kontakt mit den rotierenden Allseitenrädern.

Konstruktiv besonders vorteilhaft ist, dass die Aufstandsteile des Tragelements im Wesentlichen auf einer Höhe eines Äquators der Kugel angeordnet sind. Dadurch wird eine in Bezug auf die Schwierigkeit mittlere Balancierbarkeit des Fahrzeugs erreicht.

Für eine gute Balancierbarkeit des Fahrzeugs durch die Position der Kugel zwischen den Füßen des Fahrers und ein schnelleres Anfahren durch die Annahme der vorbestimmten Positionen der Füße ist vorgesehen, dass auf den Aufstandsteilen Aufstandsflächen für den Fahrer angeordnet sind und die Aufstandsteile mit Aufstandsflächen in Bezug auf die Kugel gegenüber liegend angeordnet sind.

Besonders vorteilhaft ist vorgesehen, dass die Antriebsanordnung an dem Ringteil des Tragelements befestigt ist und die vier Allseitenräder jeweils an einer Drehachse zur Übertragung der Antriebskräfte auf die Kugel gelagert sind.

Außerdem vorteilhaft für das Gewicht des Fahrzeuges ist, dass jedes Allseitenrad direkt und ohne einer Zwischenschaltung eines Getriebes über einen Elektromotor angetrieben ist und jeder Elektromotor auf dem Ringteil des Tragelements befestigt ist.

In einer bevorzugten Ausführungsform ist vorgesehen, dass die Elektromotoren über mindestens eine wieder aufladbare Batterie mit Energie versorgt sind und die Batterien im Einbauraum des Tragelements um den Umfang der Kugel gleichmäßig verteilt angeordnet sind. Die Anordnung der Batterien um den Umfang der Kugel stellt keine Beeinträchtigung für das Fahrverhalten des Fahrzeugs durch eine gleichmäßige Gewichtsverteilung dar.

Zur Bestimmung der Lage des Tragelements im Raum sind an dem Tragelement Kreisel angeordnet sind, mit denen der Grad der Neigung und Neigungsrichtung des Tragelements messbar sind und die gemessene Neigung und Neigungsrichtung an die Auswertesteuerung übergeben wird.

Vorteilhafter Weise ist vorgesehen, dass die Steuerung ein Balance-Steuerungsmodul umfasst, das einen Fahrer bei der Ausbalancierung des Tragelements in eine horizontale Lage im Raum unterstützt. Diese Ausbalancierung des Tragelementes in eine ausbalancierte Ausrichtung erfolgt über eine entsprechende Ansteuerung des ersten bis vierten Allseitenrads. Der Grad der Unterstützung kann variiert werden und so groß eingestellt werden, dass es für den Fahrer relativ einfach ist auf dem Tragelement zu balancieren. Andererseits ist die Unterstützung nicht so groß, dass der Fahrer daran gehindert wird, durch ein Verlagern seines Gewichts nach Art eines Gaspedals eine Beschleunigung des Fahrzeugs in die Neigungsrichtung auf Grund der Gewichtsverlagerung hervor zu rufen.

Konstruktiv besonders vorteilhaft ist, dass an den Aufstandsflächen des Tragelements vier Sensoren angeordnet sind, die das Vorhandensein der Fußspitzen beziehungsweise der Fersen der Füße des Fahrers registrieren und die gemessene Gewichtsveränderung an die Auswertesteuerung übergeben. Das Abheben und Absetzen der Fußspitzen und Fersen des Fahrers ermöglicht die Steuerung der Rotation des Fahrzeugs um die Hochachse.

Ein optimales Fahrverhalten des Fahrzeugs ohne schlagartige oder abrupte Bewegungen wird dadurch erreicht, dass sich das Tragelement über eine Stützanordnung auf der Kugel abstützt, wobei die Stützanordnung mindestens ein nicht angetriebenes Allseitenrad umfasst.

In einer bevorzugten Ausführungsform ist vorgesehen, dass das Fahrzeug in Bezug auf den Fahrer haltegrifflos ist. Der Fahrer kann somit auf dem Tragelement des Fahrzeugs skateboardartig frei balancieren ohne sich mit den Händen an einer Stütze oder an einer Lenkstange abzustützen oder auf einem auf dem Tragelement angeordneten Sattel oder Sitz zu sitzen.

Nachfolgend wird die Erfindung an Hand eines in einer Zeichnung dargestellten Ausführungsbeispiels näher erläutert. Es zeigen:
Figur 1 eine perspektivische Prinzip-Ansicht eines erfindungsgemäßen Fahrzeugs für die Fortbewegung eines Fahrers in einer ersten Ausführungsform,
Figur 2 eine Draufsicht auf das Fahrzeug gemäß Figur 1 ohne Fahrer,
Figur 3 eine Seitenansicht des Fahrzeugs gemäß Figur 2,
Figur 4 eine weitere Seitenansicht des Fahrzeugs gemäß Figur 2,
Figur 5 einen horizontalen Querschnitt durch das Fahrzeug gemäß Figur 2,
Figur 6 eine schematische Ansicht der Kugel mit einem einzigen Allseitenrad,
Figur 7 einen vertikalen Querschnitt durch das Fahrzeug gemäß Figur 2,
Figur 8 eine weitere schematische Ansicht der Kugel mit einem einzigen Allseitenrad,
Figur 9 eine weitere schematische Ansicht der Kugel mit einem einzigen Allseitenrad,
Figur 10 einen weiteren vertikalen Querschnitt durch das Fahrzeug gemäß Figur 2,
Figur 11 eine schematische Draufsicht einer Kugel mit antreibenden Allseitenrädern,
Figur 12 eine schematische Seitenansicht der Kugel mit Allseitenrädern und einer Stützanordnung,
Figur 13 eine weitere schematische Seitenansicht der Kugel mit Allseitenrädern,
Figur 14 eine weitere schematische Draufsicht der Kugel mit Allseitenrädern und der Stützanordnung,
Figur 15 ein Prinzipschaltbild der Steuerung des Fahrzeugs,
Figur 16 eine schematische Draufsicht der Kugel mit Allseitenrädern und Sensoren auf den Aufstandsflächen und
Figur 17 eine perspektivische Ansicht des Fahrzeugs gemäß Figur 1 mit Fußpositionierung während des Startvorgangs.

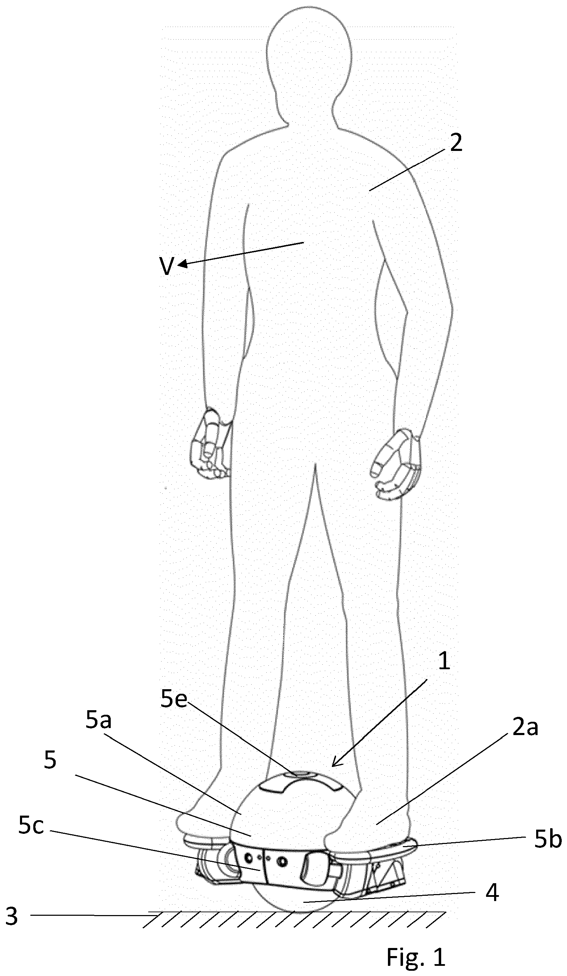

In der Figur 1 ist eine perspektivische Prinzip-Ansicht eines erfindungsgemäßen Fahrzeugs 1, insbesondere eines skateboardartigen Kugelrollers, für die Fortbewegung eines Fahrers 2 dargestellt. Das Fahrzeug 1 besteht im Wesentlichen aus einer auf einem Boden 3 abrollenden Kugel 4, einem sich auf der Kugel 4 abstützenden Tragelement 5 und einer in dieser Figur nicht dargestellten Antriebsanordnung 6 mit einer Steuerung 7. Die Verwendung der Kugel 4 als Radersatz hat den Vorteil, dass das Fahrzeug 1 auf dem Boden 3 in alle beliebigen Richtungen bewegt werden kann. Die Kugel 4 hat einen Durchmesser im Bereich von 100 mm bis 500 mm, vorzugsweise im Bereich von 200 mm bis 250 mm. Das Fahrzeug 1 kann auch als Sportgerät, Freizeitgerät oder Fungerät bezeichnet werden, auf dem der Fahrer 2 während der Benutzung wie bei einem Skateboard frei balancierend auf dem Tragelement 5 steht und bei dem der Fahrer 2 das Fahrzeug 1 über Gewichtsverlagerung steuert, bremst und lenkt. Außerdem ist das Fahrzeug 1 in Bezug auf den Fahrer 2 haltegrifflos. Somit stehen dem Fahrer 2 keine Hilfsmittel wie eine Lenkstange, eine Stütze zum Abstützen oder einen Sitz zum Sitzen beziehungsweise als Hilfe beim Balancieren zur Verfügung. Der Fahrer 2 muss somit frei auf dem Tragelement 5 des Fahrzeugs 1 balancieren ohne sich mit den Händen an einer Stütze oder an einer Lenkstange beziehungsweise mit den Schienbeinen an einem Kniebrett abzustützen oder auf einem auf dem Tragelement 5 angeordneten Sattel oder Sitz zu sitzen.

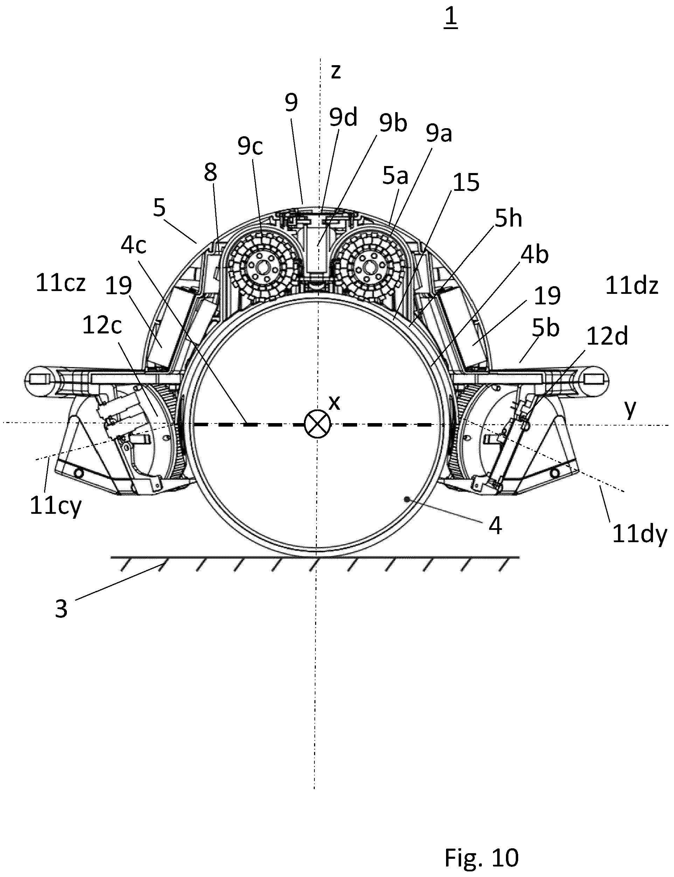

Das Tragelement 5 ist ein komplexes Bauteil mit mehreren Funktionen und weist hierzu ein Deckelteil 5a, zwei Aufstandsteile 5b und ein Ringteil 5c auf. Über das Deckelteil 5a wird ein oberer Teil 4a der Kugel 4 abgedeckt und schützt somit den Fahrer 2 vor Berührungen mit der rotierenden Kugel 4 und das Deckelteil 5a umgibt einen Einbauraum 8 (siehe Figur 10) zwischen einer Oberfläche 4b der Kugel und einer Innenseite 5h des Deckelteils 5a. Auch wird das Deckelteil 5a über eine in dieser Figur 1 von dem Deckelteil 5a verdeckte Stützanordnung 9 zentral auf der Kugel 4 abgestützt.

An einem unteren Rand des Deckelteils 5a schließen sich in Bezug auf die Kugel 4 gegenüberliegend angeordnete Aufstandsteile 5b an. Die zwei Aufstandsteile 5b ragen wie seitliche Vorsätze von dem Deckelteil 5a nach außen weg und bilden im Wesentlichen ebene beziehungsweise in einer horizontalen Balance-Lage des Fahrzeugs 1 gesehen horizontale Aufstandsflächen 10 für einen rechten und einen linken Fuß 2a des Fahrers 2. In einer Vorwärtsfahrtrichtung V des Fahrzeuges 1 gesehen sind die Aufstandsflächen 10 rechts und links neben der Kugel 4 angeordnet. Die Vorwärtsfahrtrichtung V ist hierbei auf den Fahrer 2 bezogen, der sich mit einer geraden Blickrichtung nach vorne also brustwärts nach vorne bewegt. Die beiden Aufstandsteile 5b sind in einer Draufsicht gesehen trapezförmig mit abgerundeten Ecken ausgebildet. Außerdem sind die Aufstandsteile 5b als Platte beziehungsweise Blech ausgebildet, so dass die Höhe des horizontal ausgerichteten Aufstandsteils 5b nur einem Bruchteil der Höhe der Kugel 4 entspricht.

Für den Fahrer 2 sieht das Fahrzeug 1 auf den Aufstandsteilen 5b zwei Aufstandsflächen 10 für die Füße 2a des Fahrers 2 vor. Diese Aufstandsflächen 10 können bloße Markierungen in der Größe von Füßen 2a oder mit einem rutschhemmenden Belag ausgelegte oder antirutschbeschichtete freie Bereiche auf den Aufstandsteilen 5b sein. Die Aufstandsteile 5b sind so ausgebildet, dass deren äußere Ränder 5d etwas höher als die Aufstandsflächen 10 sind. Dadurch ist eine deutliche Abgrenzung der Aufstandsflächen 10 zum sicheren Stand des Fahrers 2 auf den Aufstandsteilen 5b gewährleistet, sodass das Verrutschen von den Aufstandsflächen 10 vermieden werden kann. Zur Erleichterung des Auf- und Absteigens auf das Fahrzeug 1 beziehungsweise von dem Fahrzeug 1 sind keine weiteren Befestigungsmittel für die Füße 2a an den Aufstandsteilen 5b vorgesehen.

Die Aufstandsflächen 10 können aber alternativ auch als freie Flächen ohne äußeren Rand 5d mit einem Halteriemen oder schuh- oder sandalenförmig mit oder ohne Halteriemen oder gleichwirkenden Mittel ausgebildet sein, um dem Fahrer 2 einen festeren Halt auf den Aufstandsteilen 5b während der Fahrt zu geben. Die Aufstandsflächen 10 bestimmen indirekt auch die Größe beziehungsweise Breite der Aufstandsteile 5b, da der Fahrer 2 bequem und sicher auf den Aufstandsteile 5b stehen muss, um das Fahrzeug 1 durch Gewichtsverlagerungen steuern zu können. Grundsätzlich ist es auch denkbar, dass die Aufstandsteile 5b nicht nur trapezförmig sondern auch oval, rechteckig oder mehreckig oder in einer kombinierten geometrischen Form ausgebildet sind. Die trapezförmigen Aufstandsteile 5b haben jedoch den Vorteil, dass der Fahrer 2 trotz materialsparender Ausführung eine ausreichende Stabilität hat und ein schnelleres Anfahren durch die Annahme einer vorbestimmten Fahrerposition genießt.

An einem unteren Rand des Deckelteils 5a beziehungsweise unten an den beiden Aufstandsteilen 5b schließt sich ein umlaufendes Ringteil 5c, das der Stabilisierung der Aufstandsteile 5b und als Abdeckung von Komponenten der Antriebsanordnung 6, wie beispielsweise Allseitenrädern 11a, 11b, 11c, 11d und Motoren 12a, 12b, 12c, 12d dient. Insgesamt ragt somit die Kugel 4 mit einem Teil ihres unteren Teils nach unten aus dem Tragelement 5 beziehungsweise dessen Ringteil 5c hinaus. Der Ringteil 5c schützt die Antriebsanordnung 6 vor Verschmutzung und die Füße 2a des Fahrers vor einem möglichen Kontakt mit den rotierenden Allseitenrädern 11a, 11b, 11c, 11d und den Motoren 12a, 12b, 12c, 12d.

In den zuvor beschriebenen Ausführungsformen weist das Tragelement 5 ein Ringteil 5c in Verlängerung des Deckelteils 5a nach unten auf und zur Unterstützung der Aufstandsteile 5b. Alternativ kann dieses Tragelement 5 auf ein Teil reduziert werden, dass in Vorwärtsfahrtrichtung V gesehen an ein Trapezdachprofil im Querschnitt gesehen erinnert. Dieses Tragelement 5 besteht somit von oben ausgehend aus einem horizontalen und flachen Querträger, an den sich an den Rändern rechts und links jeweils und somit jeweils seitlich neben der Kugel 4 ein nach unten verlaufender Seitensteg anschließt. Der Querträger befindet sich somit oberhalb der Kugel 4 und die beiden Seitenstege erstrecken sich ausgehend von dem Querträger senkrecht beziehungsweise schräg nach außen erweiternd nach unten bis in etwa auf die Höhe des Äquators 4c der Kugel 4. An den unteren Enden der Seitenstege schließen sich die horizontalen und nach außen weisenden Aufstandsteile 5b an.

Auch zeigt die Figur 1, dass das Fahrzeug 1 in Bezug auf den Fahrer 2 haltegrifflos ist. Das Fahrzeug 1 kann in einer alternativen Ausführung jedoch oben eine mittige Öffnung 5e am Deckelteil 5a des Tragelements 5 für einen Haltegriff, eine Haltestange mit oder ohne Lenkerstange oder einem Sitz vorgesehen sein, die jeweils bei Bedarf einfach angebaut werden können, um mehr Sicherheit beim Balancieren auf dem Fahrzeug 1 zu bieten.

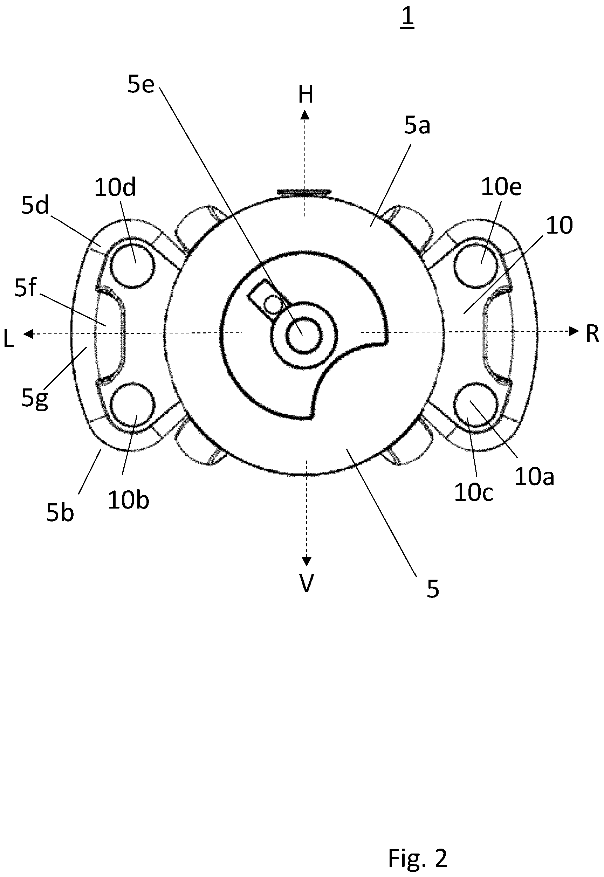

In der Figur 2 ist eine Draufsicht auf das Fahrzeug 1 ohne einen Fahrer 2 gezeigt. Besonders gut ist in dieser Ansicht die Ausgestaltung der Aufstandsteile 5b des Tragelements 5 zu erkennen. Die trapezförmig beziehungsweise dreieckförmig ausgeführten Aufstandsteile 5b sind in Bezug auf die Kugel 4 gegenüberliegend an einem Übergang zwischen dem Deckelteil 5a und dem Ringteil 5c angeordnet. Jedes der Aufstandsteile 5b weist eine Aufstandsfläche 10, einen äußeren Rand 5d, eine Grifföffnung 5f und einen Griff 5g auf. Der zylindrische äußere Rand 5d, der höher als die Aufstandsfläche 10 ausgebildet ist, begrenzt das trapezförmige Aufstandsteil 5b nach außen und schafft somit eine deutliche Abgrenzung der Aufstandsfläche 10. Der Höhenunterschied zwischen der Aufstandsfläche 10 und dem äußeren Rand 5d liegt bei einem Bruchteil der Gesamthöhe von Aufstandsteilen 5b. Dadurch wird die Abgrenzung der Aufstandsflächen 10 in der Form gewährleistet, dass der Fahrer 2 von der Aufstandsfläche 10 während der Fahrt nicht abrutschen, gleichzeitig aber auch nicht beim Auf- und Absteigen darüber stolpern kann. Der äußere Rand 5d kann alternativ auch eine andere beliebige abgerundete oder eckige beziehungsweise kantige Form haben. Der Vorteil eines zylindrischen äußeren Randes 5d liegt jedoch darin, dass der Fahrer 2 auf weniger bis gar keinen Widerstand bei einem gleitenden Absteigen mit den Füßen 2a stößt.

Die Aufstandsflächen 10 sind mit jeweils zwei Anti-Rutsch-Auflagen 10a versehen. Die Anti-Rutsch-Auflagen 10a befinden sich jeweils in dem vorderen Bereich des Fußes 2a, nämlich im Bereich der Fußspitze, und in dem hinteren Bereich des Fußes 2a, nämlich im Bereich der Ferse. Dadurch wird ein fester Stand des Fahrers 2 auf den Aufstandsflächen 10 des Tragelements 5 gewährleistet und eine bessere Koordination der Gewichtsverlagerung ermöglicht. Die auf den Aufstandsflächen 10 angebrachten Anti-Rutsch-Auflagen 10a bieten in Verbindung mit dem höher als die Aufstandsflächen 10 ausgebildeten äußeren Rand 5d eine vorbestimmte sichere Position der Füße 2a von dem Fahrer 2. Unter jeder Anti-Rutsch-Auflage 10a befinden sich insgesamt vier Sensoren 10b, 10c, 10d, 10e, die das Abheben der Fußspitze beziehungsweise der Ferse durch die darauffolgende Gewichtsveränderung registrieren und ein entsprechendes Signal an die Steuerung 7 schicken. Dadurch wird die Bewegung des Fahrzeuges 1 initiiert und die gewünschte Bewegungsrichtung bestimmt.

Die Aufstandsteile 5b weisen jeweils eine Grifföffnung 5f und einen dadurch gebildeten Griff 5g auf. Die Grifföffnung 5f mit abgerundeten Ecken und Kanten befindet sich an der in Bezug auf die Kugel 4 äußeren Seite des Aufstandsteils 5b anliegend an dem äußeren Rand 5d. Die Grifföffnung 5f ist so ausgebildet, dass eine Hand des Fahrers 2 durchgreifen kann. Alternativ können die Ecken und Kanten der Grifföffnung 5f unabgerundet bleiben. Die abgerundeten Ecken und Kanten sorgen jedoch dafür, dass die Verletzungsgefahr beim Durchgreifen in die Grifföffnung 5f deutlich geringer als bei unabgerundeten Ecken und Kanten ist. Durch die Grifföffnung 5f frei gewordener äußerer Rand 5d des Aufstandsteils 5b bildet einen Griff 5g zum einfachen Tragen des Fahrzeugs 1 zwischen den Fahrten. Auch ein Trageriemen oder ein ähnliches Hilfsmittel können an einem oder gleichzeitig zwei Griffen 5g der Aufstandsteile 5b befestigt werden.

Um nachfolgend die Fahrrichtungen und die Funktionsweise des Fahrzeuges 1 näher erläutern zu können, wird ein kartesisches Koordinatensystem mit seinem Nullpunkt in den Mittelpunkt der Kugel 4 gelegt. Die Längsachse x dieses Koordinatensystems weist somit in Vorwärtsfahrtrichtung V und Rückwärtsfahrtrichtung H, die Querachse y in Rechtsfahrtrichtung R und Linksfahrtrichtung L und die Hochachse z in die Vertikale. Die Längsachse x und die Querachse y verlaufen hierbei parallel und die Hochachse z rechtwinklig zu einem horizontal ausgerichtetem Boden 3.

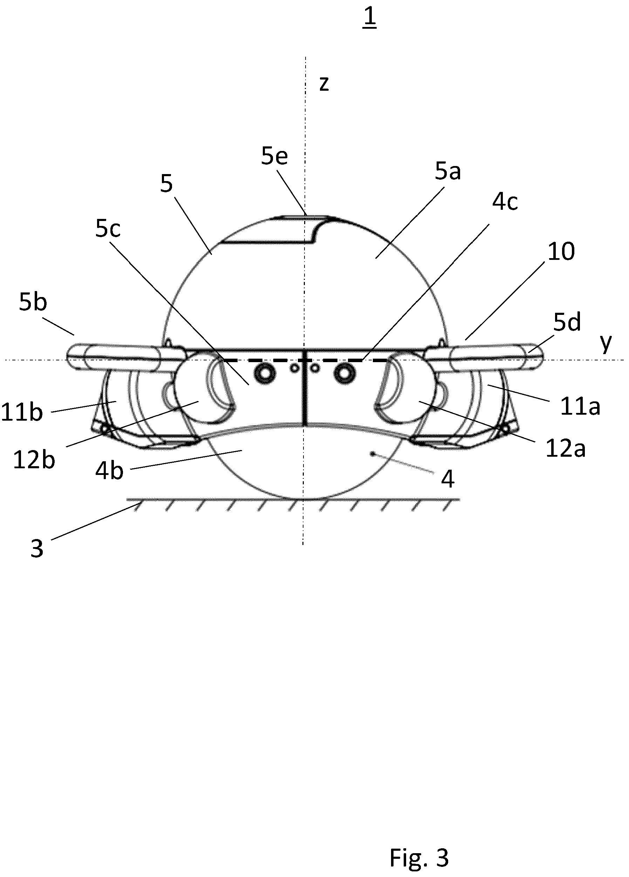

Die Figur 3 zeigt eine Seitenansicht des erfindungsgemäßen Fahrzeugs 1 gemäß Figur 2 in x-Richtung beziehungsweise Rückwärtsfahrtrichtung H. Der Figur ist zu entnehmen, dass die Aufstandsteile 5b des Tragelements 5 in ihrer horizontal ausgerichteten Lage vorzugsweise auf Höhe eines Äquators 4c bezogen auf eine Hochachse z der Kugel 4 angeordnet sind. Denkbar ist auch die Aufstandsteile 5b höher für Fortgeschrittene oder tiefer für Anfänger anzuordnen. Hierdurch werden größere oder geringere Neigungswinkel der Aufstandsteile 5b in Bezug auf die Kugel 4 erlaubt, die ein Balancieren, Auf- oder Absteigen oder Steuern des Fahrzeuges 1 erschweren oder erleichtern.

Auch zeigt die Figur 3, dass der Deckelteil 5a des Tragelements 5 sphärisch ausgebildet ist und somit die Form der Kugel 4 jedoch mit größerem Durchmesser wiederholt. Der Vorteil dieser sphärischen Ausführung liegt in einer erweiterten Neigungsfähigkeit des Tragelements 5 über eine Stützanordnung 9 (siehe Figur 10) in Bezug auf die Kugel 4. Alternativ sind aber auch weitere geometrische Ausführungen denkbar, die je nach Bedarf den Neigungswinkel des Tragelements 5 durch Übergänge von einer sphärischen in eine eckige Form beschränken.

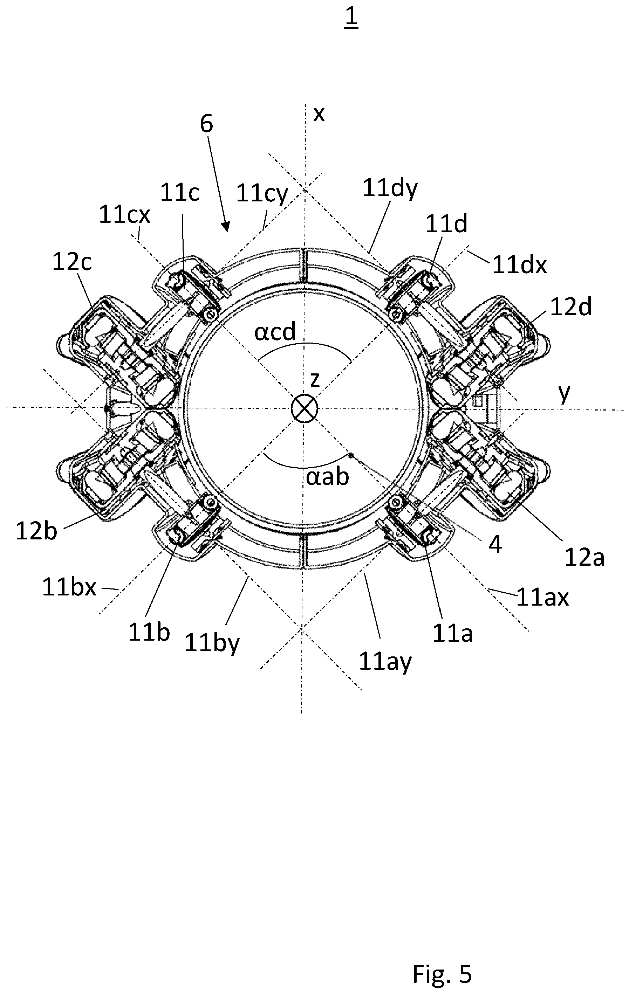

Die Konturen von einem ersten und einem zweiten Motor 12a und 12b sowie den von hiervon angetriebenen Allseitenrädern 11a und 11b sind trotz des abdeckenden Ringteils 5c erkennbar. Ein drittes und ein viertes Allseitenrad 11c, 11d sowie die dazugehörigen Motoren 12c, 12d (siehe Figur 5) sind von der der Kugel 4 und dem Ringteil 5c verdeckt.

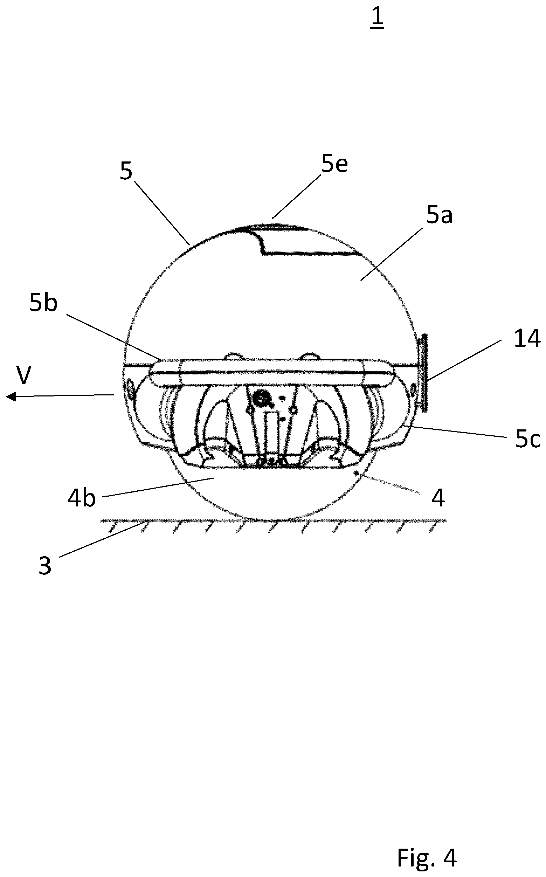

In der Figur 4 ist eine weitere Seitenansicht des Fahrzeugs 1 gemäß Figur 2 dargestellt. Im Vordergrund ist eines der beiden Aufstandsteile 5b zu sehen. Auf der der Vorwärtsfahrtrichtung V entgegengesetzten Seite des Fahrzeugs 1 ist in seinem Tragelement 5 in einem Übergangsbereich von Deckelteil 5a und Ringteil 5c eine Ladebuchse 14 zum Wiederaufladen der Batterien 19 (siehe Figur 10) des Fahrzeugs 1 angeordnet.

Die Figur 5 zeigt einen horizontalen Querschnitt durch das Fahrzeug 1 auf Höhe des Äquators 4c der Kugel 4. Diese Ansicht stellt die Ausgestaltung der Antriebsanordnung 6 in dem Tragelement 5 besonders gut dar. Die Antriebsanordnung 6 besteht im Wesentlichen aus einem ersten Allseitenrad 11a, einem zweiten Allseitenrad 11b, einem dritten Allseitenrad 11c und einem vierten Allseitenrad 11d, die jeweils direkt und ohne eine Zwischenschaltung eines Getriebes von einem ersten Motor 12a, einem zweiten Motor 12b, einem dritten Motor 12c und einem vierten Motor 12d angetrieben sind. Die Allseitenräder 11a, 11b, 11c, 11d haben jeweils vorzugsweise einen gleichen Durchmesser im Bereich von 20 mm bis 300 mm, vorzugsweise im Bereich von 50 mm bis 70 mm. Um die Ausrichtung der Allseitenräder 11a, 11b, 11c, 11d jeweils zu der Kugel 4 beschreiben zu können, ist für jedes der Allseitenräder 11a, 11b, 11c, 11d ein eigenes kartesisches Koordinatensystem mit einem Nullpunkt im Zentrum des Allseitenrades 11a, 11b, 11c, 11d und somit auch im Zentrum seiner jeweiligen Drehachse 11ay, 11by, 11cy, 11dy. Dieses Koordinatensystem umfasst als Querachse y die jeweilige Drehachse 11ay, 11by, 11cy, 11dy, eine Längsachse x 11ax, 11bx, 11cx, 11dx, die durch eine Mitte einer Lauffläche des jeweiligen Allseitenrades 11a, 11b, 11c, 11d verläuft, und eine Hochachse z 11az, 11bz, 11cz, 11dz, die auch durch die Mitte der Lauffläche des jeweiligen Allseitenrades 11a, 11b, 11c, 11d verläuft. Die Allseitenräder 11a, 11b, 11c, 11d sind jeweils an der und um die erste Drehachse 11ay, die zweite Drehachse 11by, die dritte Drehachse 11cy und die vierte Drehachse 11dy drehbar gelagert.

Die verwendeten Allseitenräder 11a, 11b, 11c und 11d sind allgemein bekannt und werden auch als omnidirektionale Räder bezeichnet. Bei den Allseitenrädern 11a, 11b, 11c und 11d besteht die Lauffläche aus einer Vielzahl entlang des Umfanges angeordneten Rollen, deren Drehachsen im Wesentlichen orthogonal zu der Drehachse 11ay, 11by, 11cy und 11dy des jeweiligen Allseitenrades 11a, 11b, 11c und 11d und tangential zu einem Umfang beziehungsweise einer Lauffläche des Allseitenrades 11a, 11b, 11c und 11d liegen. Die Verwendung von Allseitenrädern 11a, 11b, 11c und 11d erlaubt, dass sich die Kugel 4 reibungsarm neben der Antriebsrichtung des jeweiligen Allseitenrades 11a, 11b, 11c und 11d in alle anderen Richtungen zu dem jeweiligen Allseitenrad 11a, 11b, 11c und 11d drehen kann.

Mittels der Allseitenräder 11a, 11b, 11c und 11d ist das Fahrzeug 1 in allen Richtungen V, H, R und L sowie Zwischenrichtungen hiervon verfahrbar und um die Hochachse z der Kugel 4 drehbar. Die Drehachsen 11ay, 11by, 11cy, 11dy sind hierbei mit Abstand und tangential zur Oberfläche 4b der Kugel 4 angeordnet. Auch sind bei einem horizontalem Boden 3 und einer hierzu parallelen Aufstandsfläche 10 des Tragelements 5, die Drehachsen 11ay, 11by, 11cy, 11dy zum Boden 3 hin ansteigend beziehungsweise fallend ausgerichtet. Außerdem sind die Allseitenräder 11a, 11b, 11c, 11d im Wesentlichen gleichmäßig um den Umfang der Kugel 4 relativ zu der Hochachse z der Kugel 4 verteilt.

In Bezug auf den Nullpunkt des Koordinatensystems der Kugel 4 und auf die x-y-Ebene gesehen sind die Längsachsen 11ax und 11bx sowie 11cx und 11dx von Allseitenrädern 11a und 11b sowie 11c und 11d jeweils in einem Abstandswinkel αab und αcd zueinander beabstandet angeordnet. In dieser Ausführung sind die Abstandswinkel αab und αcd gleich. Es kann jedoch vorgesehen sein, dass jeder Abstandswinkel αab, αcd im Einzelnen einstellbar ist. Die Abstandswinkel αab, αcd liegen im Bereich von 80 Grad bis 110 Grad beziehungsweise sind vorzugsweise 90 Grad. In dieser Ausführungsform ist die Drehachse 11by des zweiten Allseitenrades 11b orthogonal zu der Drehachse 11cy des dritten Allseitenrades 11c und die Drehachse 11ay des ersten Allseitenrades 11a orthogonal zu der Drehachse 11dy des vierten Allseitendrades 11d ausgerichtet. Somit liegen die Drehachsen 11ay und 11cy der Allseitenräder 11a und 11c parallel zueinander.

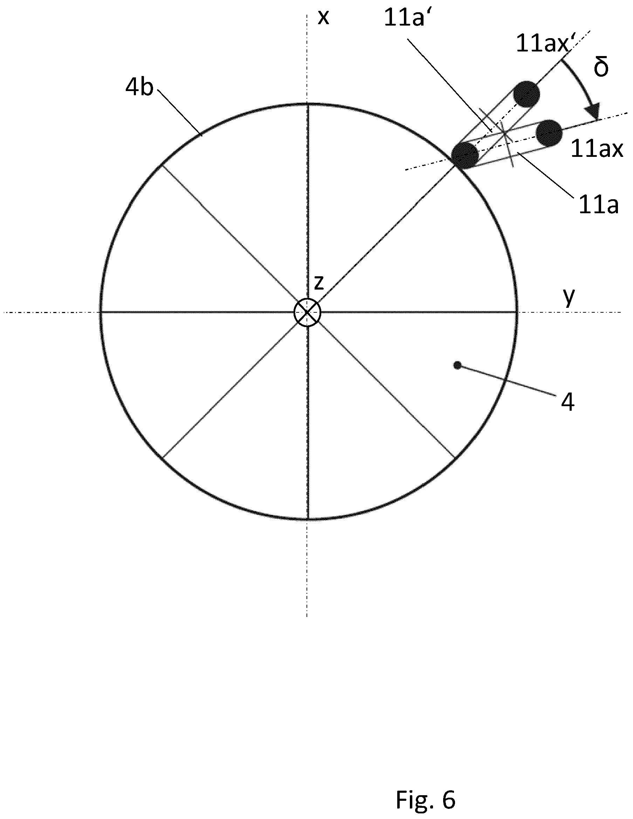

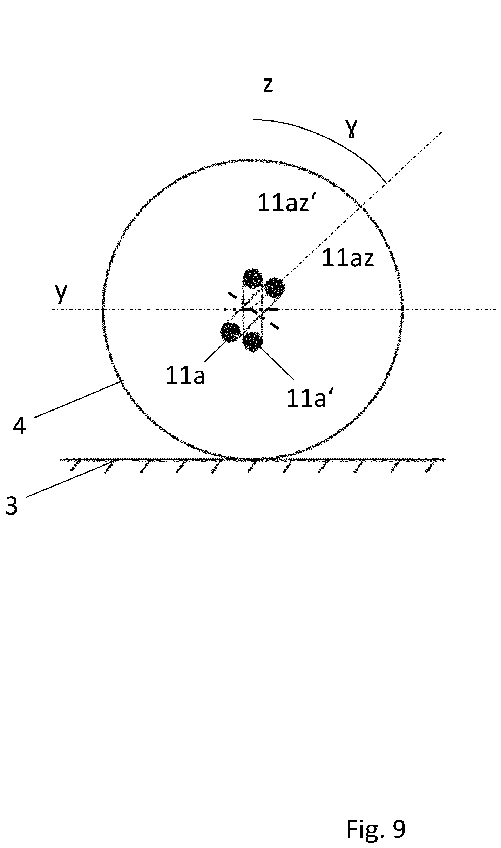

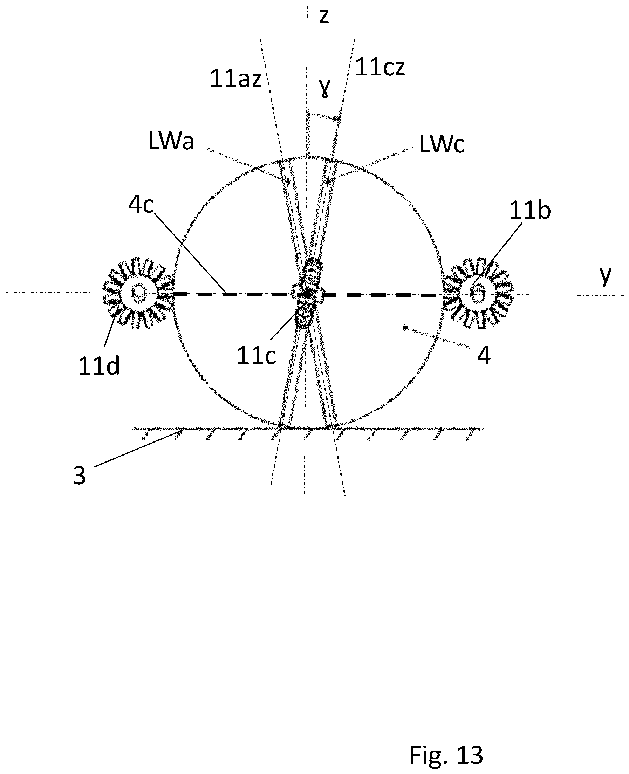

Die Allseitenräder 11a, 11b, 11c, 11d stehen mit ihren Längsachsen 11ax, 11bx, 11cx und 11dx orthogonal zu der Oberfläche 4b der Kugel 4 beziehungsweise zu einer Tangente zur Oberfläche 4b der Kugel 4 und einer Kontaktfläche des jeweiligen Allseitenrades 11a, 11b, 11c, 11d mit der Oberfläche 4b der Kugel 4. Das Allseitenrad 11a, 11b, 11c, 11d weist somit weder einen Kippwinkel (siehe Figur 9), noch einen Anklappwinkel auf. Ein mit der nachfolgenden Figur 6 erläuterter Anklappwinkel δ beträgt somit für alle Allseitenräder 11a, 11b, 11c, 11d 0 Grad. In dieser Ausführung sind die Anklappwinkel δ von allen Allseitenrädern 11a, 11b, 11c und 11d gleich. Es kann jedoch vorgesehen sein, dass jeder Anklappwinkel δ im Einzelnen einstellbar ist. Die Ausrichtung beziehungsweise die Neigung der Allseitenräder 11a, 11b, 11c, 11d relativ zu der Achse y der Kugel 4 hat eine Auswirkung auf die Übertragung des Drehmoments und kann somit die Reaktionsgeschwindigkeit des Fahrzeugs 1 beeinflussen. Ein koordinierter Betrieb der Allseitenräder 11a, 11b, 11c und 11d führt somit zu einer Bewegung des Fahrzeugs 1 in Vorwärtsfahrtrichtung V und Rechtsfahrtrichtung R oder in Rückwärtsfahrtrichtung H und Linksfahrtrichtung L oder in jeder beliebigen Zwischenrichtung hiervon. Eine Bewegung des Fahrzeugs 1 in Vorwärtsfahrtrichtung V oder Rückwärtsfahrtrichtung H wird beispielsweise dadurch erreicht, dass das erste und das zweite Allseitenrad 11a und 11b in die eine Richtung und die beiden anderen Allseitenräder 11c, 11d gegenläufig angetrieben werden. Eine Rotation um die Hochachse z der Kugel 4 wird dadurch ermöglicht, dass die Allseitenräder 11a, 11b, 11c und 11d definiert über den Kippwinkel γ(siehe Figur 13) gekippt sind.

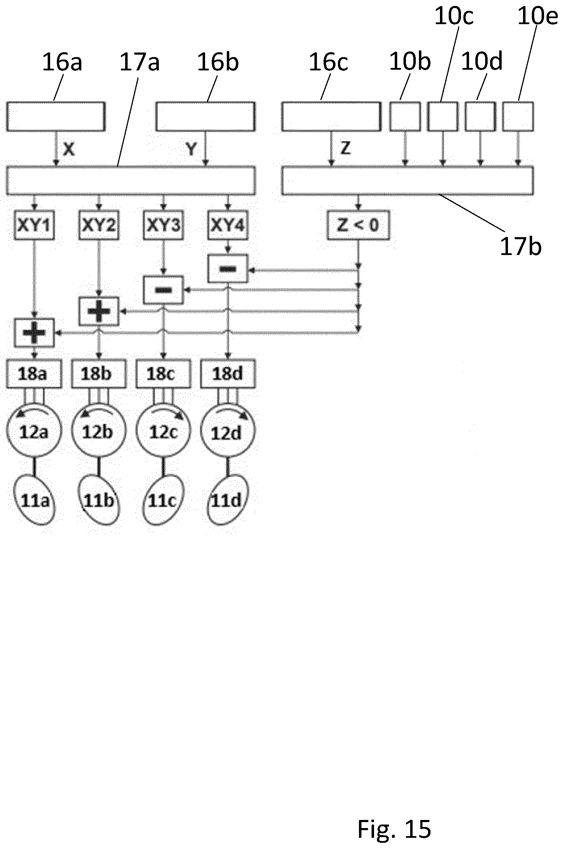

Die Motoren 12a, 12b, 12c und 12d sind an dem Ringteil 5c des Tragelements 5 befestigt und werden über eine Steuerung 7 (siehe Figur 15) angesteuert. Als Motoren 12a, 12b, 12c und 12d kommen 24V-Gleichstrommotoren zum Einsatz mit Leistungen im Bereich von 350 Watt bis 800 Watt.

Die Figur 6 zeigt eine schematische Ansicht der Kugel 4 mit einem einzigen Allseitenrad 11a, um den Anklappwinkel δ zu verdeutlichen. Mittels eines Anklappwinkel δ kann einerseits eine Rotation des Fahrzeugs 1 um die Hochachse z über die angetriebenen Motoren 12a, 12b, 12c, 12d erreicht werden und andererseits bei Allseitenräder 11a, 11b, 11c, 11d mit einem größeren Durchmesser durch Anlegen der Allseitenräder 11a, 11b, 11c, 11d an die Oberfläche 4b der Kugel 4 Bauraum eingespart werden. Die Figur 6 zeigt deutlich, dass der Anklappwinkel δ zwischen der x-Achse 11ax, 11bx, 11cx, 11dx des jeweiligen geneigten Allseitenrades 11a, 11b, 11c, 11d und der x-Achse 11ax', 11bx', 11cx', 11dx' eines nicht geneigten Allseitenrades 11a', 11b', 11c', 11d' eingeschlossen ist. Der Anklappwinkel δ liegt im Bereich von - 110 bis + 110 Grad und vorzugsweise bei 0 Grad oder 45 Grad.

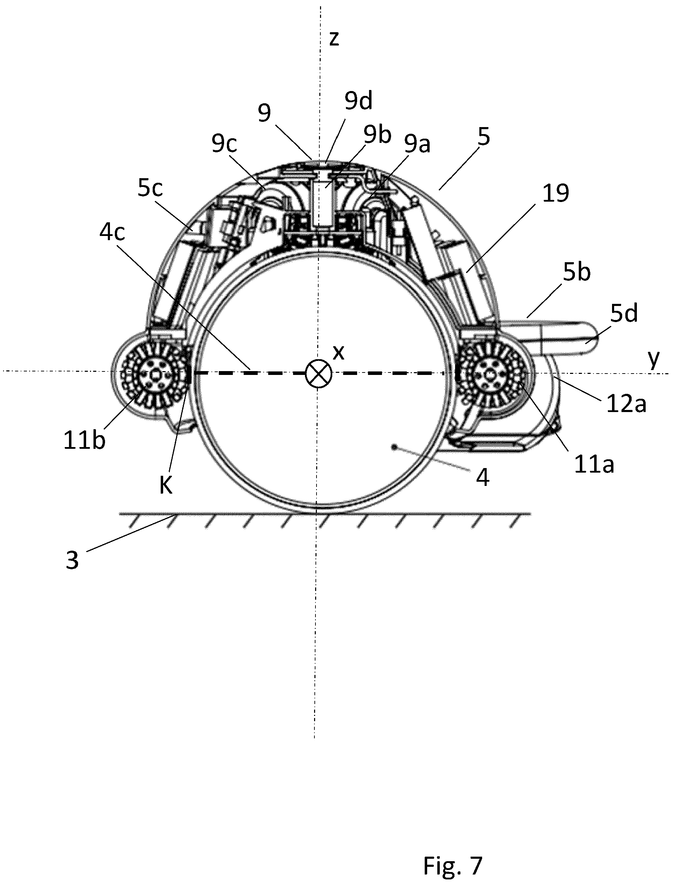

Die Figur 7 zeigt einen vertikalen Querschnitt durch das Fahrzeug 1 gemäß Figur 2 über die Mitte der Kugel 4. Dabei sind die Allseitenräder 11a, 11b sowie die sich in dem Einbauraum 8 befindende Stützanordnung 9, umfassend vier Allseitenräder 9a, 9b, 9c, 9d, und Batterien 19 gut erkennbar. Auch zeigt die Figur 7, dass zwischen der Oberfläche 4b der Kugel 4 und der Innenseite 5h des Deckelteils 5a ein umlaufender Spalt 15 verbleibt, der eine freie Drehbarkeit der Kugel 4 relativ zu dem Tragelement 5 erlaubt. Auch kann eine Federung des Fahrzeugs 1 im Bereich der Anlenkung der Allseitenräder 11a, 11b, 11c, 11d oder über eine elastische Kugel vorgesehen werden. Die Kugel 4 ist aus Hartplastik hergestellt. Beispielsweise sind Bowlingkugeln geeignet. Außerdem ist ersichtlich, dass die Allseitenräder 11a, 11b im Bereich des Äquators 4c angreifen.

Mittels einer Verkippung der Allseitenräder 11a, 11b, 11c, 11d relativ zu der Hochachse z der Kugel 4 um einen Kippwinkel γa, γb, γc, yd ist eine Rotation des Fahrzeugs 1 um die z-Achse der Kugel 4 durch eine von dem Fahrer 2 gesteuerte Rotation des Tragelements 5 möglich, sodass der Fahrer 2 mit der Brust in der jeweiligen Fahrtrichtung nach vorne ausgerichtet bleibt. Auch wird dadurch das Fahrzeug 1 in Bezug auf eine ungewollte Rotation des Tragelements 5 um die Kugel 4 stabilisierbar. Dies kann beispielweise bei Bewegungen des Fahrzeugs 1 in Vorwärtsfahrtrichtung V oder in Rückwärtsfahrtrichtung H erforderlich sein. Der Kippwinkel γa, γb, γc, yd ist aus dieser Figur nicht ersichtlich und wird nachfolgend anhand der Figur 9 erläutert. Da die Allseitenräder 11a, 11b, 11c, 11d zur Übertragung des Drehmomentes an die Oberfläche 4b der Kugel 4 angestellt sind, bildet sich dadurch eine Kontaktfläche K zwischen der Lauffläche der Allseitenräder 11a, 11b, 11c, 11d und der Oberfläche 4b der Kugel 4.

In dem Einbauraum 8 über den Aufstandsteilen 5b zwischen dem Tragelement 5 und der Oberfläche 4b der Kugel 4 sind die Batterien 19 angeordnet. Die Batterien 19 sind im Wesentlichen gleichmäßig über den Umfang der Kugel 4 um die Hochachse z der Kugel 4 verteilt.

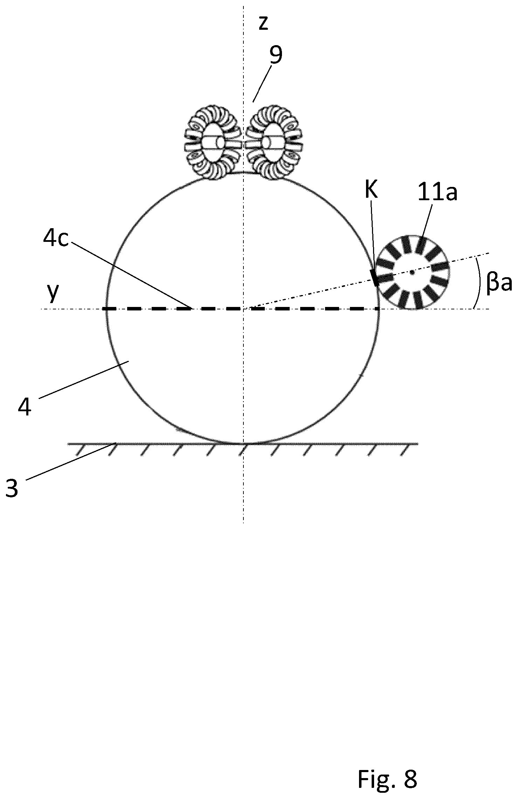

Die Figur 8 zeigt eine weitere schematische Ansicht der Kugel 4 mit einem einzigen Allseitenrad 11a und der Stützanordnung 9, um den Erhebungswinkel β zu verdeutlichen. Mittels eines Erhebungswinkels β kann das Fahrverhalten und Neigungsverhalten des Fahrzeugs 1 beeinflusst werden. Die Figur 8 zeigt deutlich, dass der Erhebungswinkel β zwischen dem Äquator 4c und einer zwischen dem Mittelpunkt der Kugel 4 und der jeweiligen Drehachse 11ay, 11by, 11cy, 11dy der Allseitenräder 11a, 11b, 11c und 11d verlaufenden Linie eingeschlossen ist. Der Erhebungswinkel β liegt im Bereich von -20 bis +65 Grad und vorzugsweise bei 0 Grad oder 45 Grad.

In der Figur 9 ist eine weitere schematische Ansicht der Kugel 4 mit einem einzigen Allseitenrad 11a gezeigt, um den Kippwinkel y zu verdeutlichen. Mittels des Kippwinkels y von mindestens zwei Allseitenrädern 11a, 11b, 11c, 11d kann eine Drehung des Fahrzeugs 1 um die Hochachse z in Rechts- und Linksrichtung und auch eine Stabilisierung in Drehrichtung um die z-Achse erreicht werden. Die Figur 9 zeigt deutlich, dass der Kippwinkel y zwischen der Hochachse 11az, 11bz, 11cz, 11dz des jeweiligen geneigten Allseitenrades 11a, 11b, 11c, 11d und der Hochachse 11az', 11bz', 11cz', 11dz' eines nicht geneigten Allseitenrades 11a', 11b', 11c', 11d' eingeschlossen ist. Die Hochachse 11az', 11bz', 11cz', 11dz' entspricht bei horizontal ausgerichtetem Tragelement 5 der Hochachse z der Kugel 4. Der Kippwinkel y liegt im Bereich von - 45 bis + 45 Grad (0 Grad ausgeschlossen, vorzugsweise 2 bis -2 Grad ausgeschlossen), vorzugsweise im Bereich von -5 bis -15 und +5 bis +15 Grad und besonders vorzugsweise bei +10 Grad oder -10 Grad. Die Kippwinkel y der jeweiligen Allseitenräder 11a, 11b, 11c, 11d sind betragsmäßig gleich. Alternativ sind nur die Kippwinkel y der jeweils beiden gegenüber liegenden Allseitenräder 11a, 11b, 11c, 11d betragsmäßig gleich.

Des Weiteren ist in der Figur 10 ein weiterer vertikaler Querschnitt durch das Fahrzeug 1 gemäß Figur 2 gezeigt, aus der sich der Aufbau und Anordnung einer Stützanordnung 9 für die Kugel 4 deutlich ergibt. Das gesamte Tragelement 5 stützt sich oben im Bereich der Mitte der Deckelteils 5a über die Stützanordnung 9 und seitlich über die Allseitenräder 11a, 11b, 11c, 11d auf der Kugel 4 ab. In der gezeigten Ausführung umfasst die Stützanordnung 9 vier nicht angetriebene und sich um jeweils eine eigene Drehachse drehbare Allseitenräder 9a, 9b, 9c, 9d, die in Bezug auf den Nullpunkt des Koordinatensystems der Kugel 4 und auf die z-y-Ebene gesehen an dem höchsten Punkt der Oberfläche 4b der Kugel 4 angeordnet sind und sehr nah aber nicht aneinander berührend gleichmäßig um die Achse z verteilt sind. Die Drehachsen der Allseitenräder 9a, 9b, 9c, 9d der Stützanordnung 9 sind im Wesentlichen parallel zu den Aufstandsflächen 10 beziehungsweise zu dem Boden 3, wenn der Boden 3 horizontal ist. Alternativ ist auch eine Ausführung mit einem Allseitenrad oder einer anderen Art der Kugellagerung möglich. Der Vorteil von der Stützanordnung 9 mit vier Allseitenrädern 9a, 9b, 9c, 9d liegt jedoch darin, dass sich das Abrollen der Kugel 4 weicher für den Fahrer 2 anfühlt und durch das Vermeiden von eventuellen schlagartigen oder abrupten Bewegungen ein Verschleiß der vier Allseitenräder 9a, 9b, 9c, 9d vermindert ist.

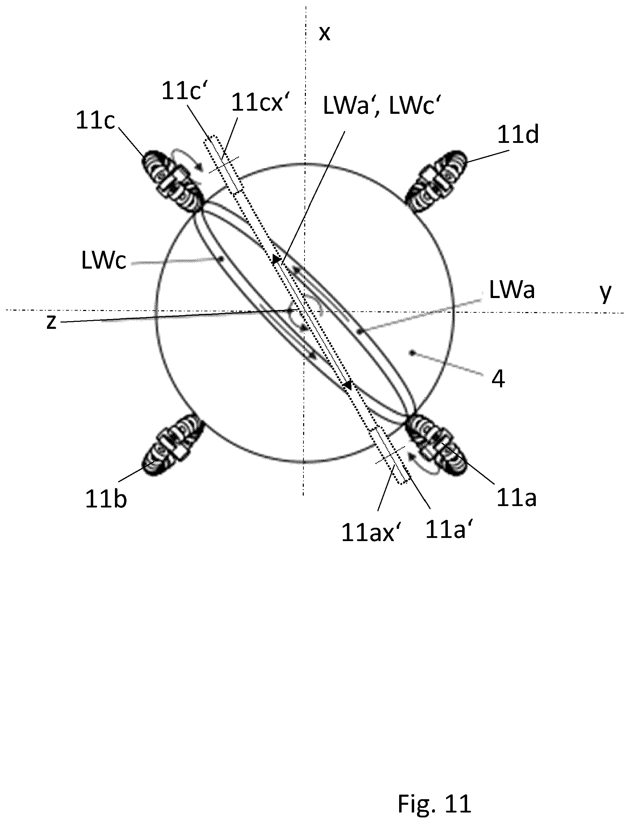

Die Figur 11 zeigt eine vereinfachte schematische Draufsicht der Kugel 4 mit angetriebenen Allseitenrädern 11a, 11b, 11c, 11d. Die Allseitenräder 11a, 11b, 11c, 11d sind jeweils um den Kippwinkel γa, γb, γc, yd verkippt. Das zweite und das dritte Allseitenrad 11b und 11c sowie das vierte und das erste Allseitenrad 11d und 11a befinden sich somit in einer X-Stellung zueinander. Die Verkippung von den zum Vergleich abgebildeten unverkippten Allseitenräder 11c' und 11a' yc und ya liegt bei 0 Grad. Die Laufwege LWa und LWc der Allseitenräder 11a und 11c, die gegeneinander laufen, bilden in Bezug auf den Nullpunkt des Koordinatensystems der Kugel 4 und auf die x-y-Ebene gesehen eine Ellipse zusammen. Dadurch kann auch eine rotierende Bewegung der Kugel 4 um die Achse z realisiert werden. Die Laufwege LWa' und LWc' der Allseitenräder 11c' und 11a' überlappen sich dagegen in Bezug auf den Nullpunkt des Koordinatensystems der Kugel 4 und auf die x-y-Ebene gesehen und bilden eine gerade Linie. Die Laufwege LWa' und LWc' der nicht verkippten Allseitenräder 11a' und 11c' ermöglichen nur eine lineare Fortbewegung der Kugel 4.

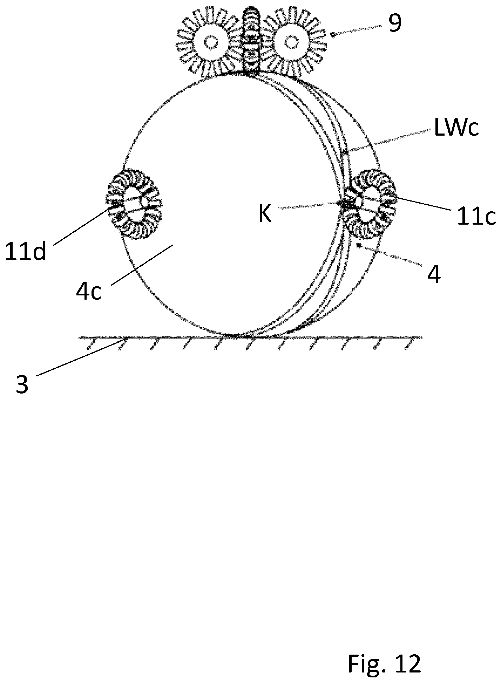

Der Figur 12 ist eine schematische Seitenansicht der Kugel 4 mit den Allseitenrädern 11c und 11d und der Stützanordnung 9 zu entnehmen. Die Allseitenräder 11c und 11d sind in den um den Kippwinkel γc, yd verkippten Stellungen dargestellt, sodass deren Laufwege LWc und LWd (nicht abgebildet) über eine Ellipse um die Kugel 4 verlaufen. Auch zeigt die Figur 8 die Kontaktfläche K des Allseitenrades 11c, wie sie zwischen der Lauffläche des Allseitenrades 11c und der Oberfläche 4c der Kugel 4 bildet. Die Stützanordnung 9 umfasst in dieser Ausführung vier nicht verkippten Allseitenräder 9a, 9b, 9c, 9d, deren Drehachsen parallel zu dem horizontalen Boden 3 verlaufen.

Die Figur 13 stellt eine weitere schematische Seitenansicht der Kugel 4 mit den Allseitenrädern 11b, 11c und 11d dar. Die Hochachsen 11az, 11bz, 11cz, 11dz der Allseitenräder 11a, 11b, 11c, 11d sind relativ zu der Hochachse z der Kugel 4 um die Kippwinkel γa, γb, γc, yd verkippt. Die Laufwege LWc und LWa der Allseitenräder 11a und 11c überschneiden sich daher auf dem Niveau des Äquators 4c. Da sowohl das erste Allseitenrad 11a als auch das dritte Allseitenrad 11c um die Kippwinkel γa und γc verkippt sind, bildet sich ein doppelter γ-Winkel zwischen deren Laufwegen LWa und LWc beziehungsweise zwischen deren Hochachsen 11az und 11cz.

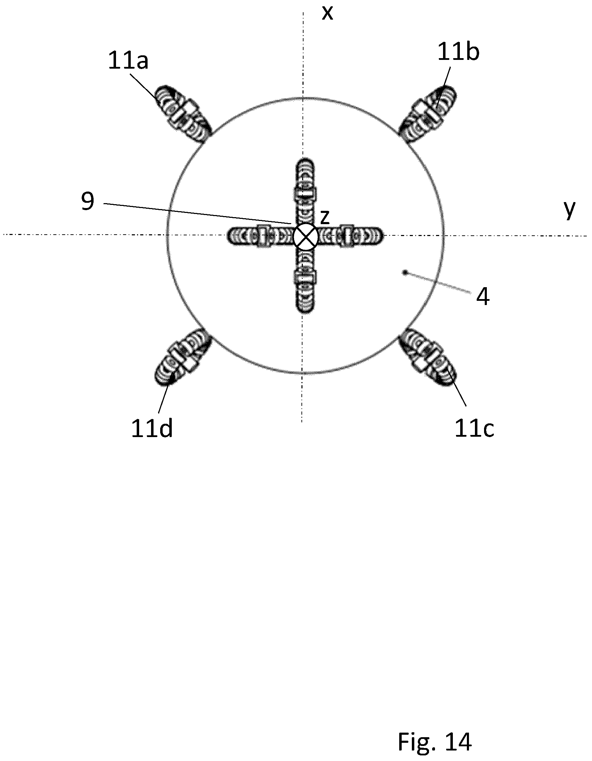

Die Figur 14 zeigt eine weitere schematische Draufsicht der Kugel 4 mit den Allseitenrädern 11a, 11b, 11c, 11d und der Stützanordnung 9. Die Allseitenräder 11a, 11b, 11c, 11d sind um die Kippwinkel γa, γb, γc, yd verkippt. Dabei befinden sich die Allseitenräder 11d und 11a sowie 11c und 11b in einer so genannten X-Stellung zueinander. Die Stützanordnung 9 umfasst vier Allseitenräder 9a, 9b, 9c, 9d, die gleichmäßig um die Hochachse z der Kugel 4 verteilt sind.

In der Figur 15 ist ein Prinzipschaltbild der Steuerung 7 des Fahrzeuges 1 dargestellt. Die Steuerung 7 ist an dem und innerhalb des Tragelements 5 angeordnet. In der Steuerung 7 ist eine Vielzahl von Bauteilen zusammengefasst, um ausgehend von einer Balance-Lage des Tragelements 5 Gewichtsverlagerungen des Fahrers 2 und somit ein Neigen des Tragelements 5 erkennen zu können. Der Grad der Neigung und die Neigungsrichtung werden von einem Nick-Kreisel 16a, einem Roll-Kreisel 16b und einem Gier-Kreisel 16c erkannt. Die Kreisel 16a, 16b und 16c liefern jeweils Beschleunigungs- und Winkeldaten. Der Nick-Kreisel 16a erfasst die Schwenkbewegung um die Querachse y, der Roll-Kreisel 16b um die Längsachse x und der Gier-Kreisel 16c um die Hochachse z. Die Steuerung einer Drehrichtung um die Hochachse z erfolgt mithilfe von vier unter den Anti-Rutsch-Auflagen 10a auf den Aufstandsflächen 10 des Tragelements 5 angeordneten Sensoren 10b, 10c, 10d, 10e. Die von den Gier-Kreiseln 16a, 16b, 16c und Sensoren 10b, 10c, 10d, 10e erfassten Daten werden an eine der zwei Auswertesteuerungen 17a, 17b geschickt.

In Abhängigkeit von dem erfassten Grad der Neigung und der Neigungsrichtung wird in der ersten und der zweiten Auswertesteuerung 17a, 17b der oder die anzutreibenden Motoren 12a, 12b, 12c und 12d bestimmt über jeweils ein elektronisches Stabilitätsprogramm 18a, 18b, 18c und 18d in der erforderlichen Drehrichtung und Drehgeschwindigkeit angesteuert, um die gewünschte Fahrbewegung des Fahrzeugs 1 zu erzeugen. Gleichzeitig wird parallel über ein Balance-Steuerungsmodul innerhalb der Auswertesteuerung 17a, 17b der Fahrer 2 unterstützt, die Balance-Lage der Aufstandsteile 5b des Tragelements 5, die vorzugsweise horizontal ausgerichtet sind, durch entsprechende Ansteuerung der Motoren 12a, 12b, 12c und 12d wieder zu erreichen. Die Auswertesteuerung 17a, 17b ist als programmierbarer Mikrocomputer ausgebildet. Die zuvor von dem Fahrer 2 über die erste Gewichtsverlagerung hervorgerufene Fahrbewegung bleibt erhalten, solange der Fahrer 2 die Neigung des Tragelements 5 aufrechterhält, und wird aufgehoben, wenn der Fahrer 2 sein Gewicht in die Gegenrichtung verlagert. Auch können unerwünschte Steuerungszustände wie eine Rotation des Tragelements 5 um die Kugel 4 während der Ausführung einer linearen Bewegung aufgelöst werden. Im Zusammenhang mit Lenksteuerungsmodulen innerhalb der Auswertesteuerung 17a, 17b kann gezielt eine Drehung des Tragelements 5 relativ zu der Kugel 4 induziert werden, so dass der Fahrer 2 immer brustwärts in Fahrtrichtung ausgerichtet bleibt beziehungsweise am Ende einer Lenkfahrt wieder brustwärts in Vorwärtsfahrtrichtung ausgerichtet ist.

Die Ansteuerung einer Drehung um die Hochachse z erfolgt über den Gier-Kreisel 16c und die Sensoren 10b, 10c, 10d, 10e, die eine Veränderung des darauf wirkenden Gewichts der Fußspitzen und/oder der Fersen der Füße 2a des Fahrers 2 registrieren und ein entsprechendes Signal an die zweite Auswertesteuerung 17b schicken.

Abhängig davon, ob die Drehung im oder gegen den Uhrzeigersinn initiiert ist, wird das Signal der z-Achse zu dem Ansteuersignal der Motoren 12a, 12b, 12c, 12d für die x- und y-Achse mit einem positiven Vorzeichen (z > 0) bei einer Drehung im Uhrzeigersinn und einem negativen Vorzeichen (z < 0) bei einer Drehung gegen den Uhrzeigersinn addiert. Die Drehrichtung um die Hochachse z der Kugel 4 wird durch eine einseitige Abhebung der Fußspitze beziehungsweise der Ferse bestimmt. Durch das Abheben der rechten Ferse beziehungsweise der linken Fußspitze und das darauffolgende Entlasten der diagonal zueinander angeordneten Sensoren 10d und 10c, steuert man aktiv eine Drehung um die Hochachse z gegen den Uhrzeigersinn. Durch das Entlasten der diagonal zueinander angeordneten Sensoren 10b und 10e, die sich unter der rechten Fußspitze und der linken Ferse befinden, steuert man dementsprechend aktiv eine Drehung um die Hochachse z im Uhrzeigersinn. Erfolgt das Abheben und dementsprechende Erkennung der Gewichtsveränderungen durch die Sensoren 10d und 10c unter der rechten Ferse und der linken Fußspitze beziehungsweise 10b und 10e unter der rechten Fußspitze und der linken Ferse gleichzeitig, beschleunigt sich die Drehung in die durch die Fußstellung gesteuerte Richtung.

Unter den vorgenannten Nick-Kreisel 16a, Roll-Kreisel 16b und Gier-Kreisel 16c sind jegliche Art von Messgeräten zu verstehen, mit den die Winkellagen und Winkelrichtungen in Bezug auf die Längsachse x, Querachse y und Hochachse z bestimmt werden können. Üblicher Weise handelt sich um elektronische Schaltungen, die mit Piezo-Sensoren arbeiten. Da der Nick-Kreisel 16a, der Roll-Kreisel 16b und der Gier-Kreisel 16c jeweils rechtwinklig zueinander angeordnet sind, kann hierüber die Lage des Tragelements 5, insbesondere der Aufstandsteile 5b, im Raum ermittelt werden.

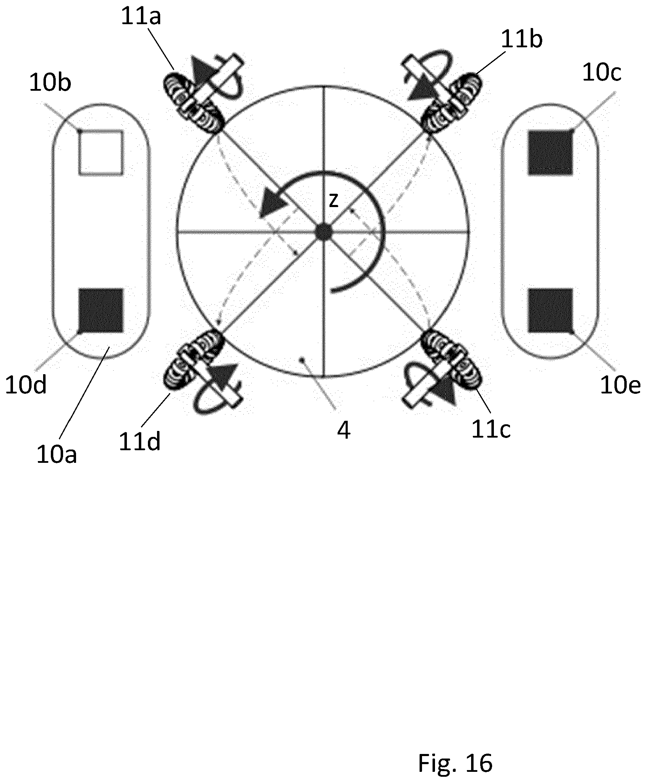

Figur 16 zeigt eine schematische Draufsicht der Kugel 4 mit den Allseitenrädern 11a, 11b, 11c, 11d und den auf den Aufstandsflächen 10a angeordneten Sensoren 10b, 10c, 10d, 10e. Die Sensoren 10c, 10d und 10e registrieren das Gewicht des rechten Fußes 2a des Fahrers 2 und seiner linken Ferse. Das Sensor 10b dagegen kann kein Gewicht registrieren, da die linke Fußspitze des Fahrers 2 angehoben ist. Nachdem die erfassten Gewichtsveränderungsdaten in der Auswertesteuerung 17b (siehe Figur 15) bearbeitet sind, wird die von dem Fahrer 2 initiierte Drehbewegung um die Hochachse z der Kugel 4 gegen den Uhrzeigersinn ausgeführt.

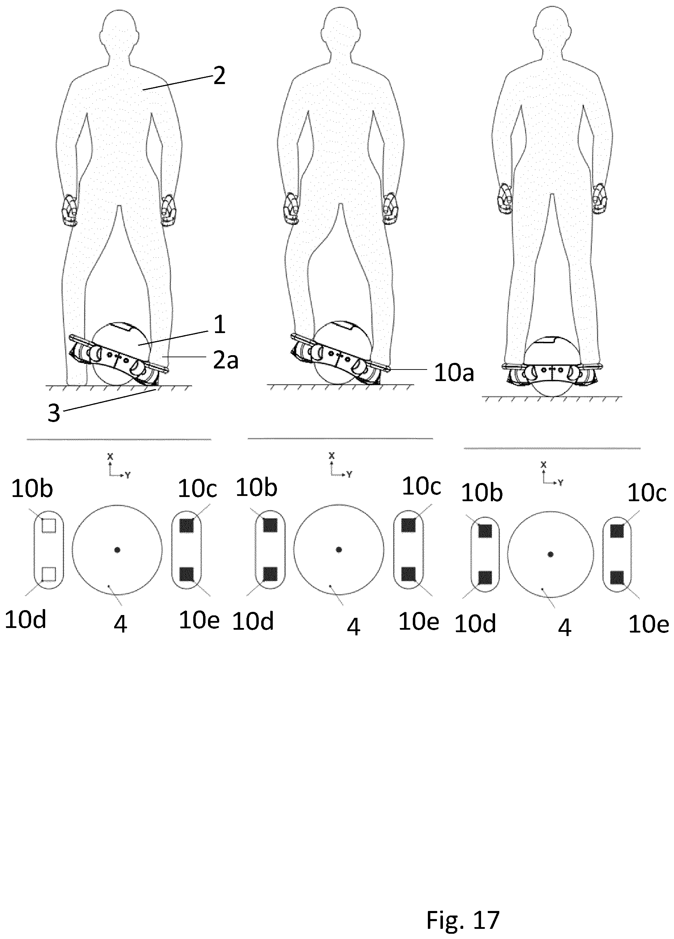

Eine perspektivische Ansicht des Fahrzeugs 1 gemäß Figur 1 mit Positionierung der Füße 2a des Fahrers 2 auf den Aufstandsflächen 10a des Tragelements 5 während des Startvorgangs ist der Figur 17 zu entnehmen. Der Fahrer 2 setzt ein Fuß 2a nach dem anderen auf die durch die auf den Aufstandsflächen 10 angeordneten Anti-Rutsch-Auflagen 10a. Wenn das eine Fuß 2a bereits auf einer Aufstandsfläche 10 positioniert ist, das andere Fuß 2a sich aber noch auf dem Boden 3 befindet, wird dadurch noch keine Ausbalancierung oder Fortbewegung des Fahrzeuges 1 gestartet. Erst nachdem alle vier Sensoren 10b, 10c, 10d, 10e das Vorhandensein beider Füße 2a des Fahrers 2 registriert und an die Auswertesteuerung 17a, 17b geschickt haben, wird das Fahrzeug 2 durch ein in der Auswertesteuerung 17a, 17b angeordnetes Balance-Steuerungsmodul ausbalanciert, sodass die Aufstandsflächen 10 des Tragelements 5 in eine horizontale Lage im Raum gebracht sind.

### Bezugszeichenliste

1 Fahrzeug
2 Fahrer
2a Füße
3 Boden
4 Kugel
4a oberer Teil
4b Oberfläche
4c Äquator
5 Tragelement
5a Deckelteil
5b Aufstandsteile
5c Ringteil
5d äußerer Rand
5e Öffnung
5f Grifföffnung
5g Griff
5h Innenseite
6 Antriebsanordnung
7 Steuerung
8 Einbauraum
9 Stützanordnung
9a erstes drehbares Allseitenrad
9b zweites drehbares Allseitenrad
9c drittes drehbares Allseitenrad
9d viertes drehbares Allseitenrad
10 Aufstandsflächen
10a Anti-Rutsch-Auflage
10b erster Sensor
10c zweiter Sensor
10d dritter Sensor
10e vierter Sensor
11a erstes Allseitenrad
11b zweites Allseitenrad
11c drittes Allseitenrad
11d viertes Allseitenrad
11ax erste Längsachse
11bx zweite Längsachse
11cx dritte Längsachse
11dx vierte Längsachse
11ay erste Querachse/Drehachse
11by zweite Querachse/Drehachse
11cy dritte Querachse/Drehachse
11dy vierte Querachse/Drehachse
11az erste Hochachse
11bz zweite Hochachse
11cz dritte Hochachse
11dz vierte Hochachse
12a erster Motor
12b zweiter Motor
12c dritter Motor
12d vierter Motor
14 Ladebuchse
15 Spalt
16a Nick-Kreisel
16b Roll-Kreisel
16c Gier-Kreisel
17a erste Auswertesteuerung
17b zweite Auswertesteuerung
18a erstes elektronisches Stabilitätsprogramm
18b zweites elektronisches Stabilitätsprogramm
18c drittes elektronisches Stabilitätsprogramm
18d viertes elektronisches Stabilitätsprogramm
19 Batterie
LWa Laufweg des Allseitenrades 11a
LWb Laufweg des Allseitenrades 11b
LWc Laufweg des Allseitenrades 11c
LWd Laufweg des Allseitenrades 11d
H Rückwärtsfahrtrichtung
K Kontaktfläche
L Linksfahrtrichtung
R Rechtsfahrtrichtung
V Vorwärtsfahrtrichtung
αab,cd Abstandswinkel
β Erhebungswinkel
y Kippwinkel
δ Anklappwinkel
x Längsachse
y Querachse
z Hochachse

## Patentansprüche

1. Fahrzeug (1) für die Fortbewegung eines Fahrers (2) mit einer auf einem Boden (3) abrollenden Kugel (4), mit einem sich auf der Kugel (4) labil abstützenden Tragelement (5), auf dem der Fahrer (2) im Betrieb des Fahrzeuges (1) balancierend steht, mit einer sich an dem Tragelement (5) abstützenden Antriebsanordnung (6), die die Kugel (4) antreibt, und mit einer Steuerung (7), über die die Antriebsanordnung (6) in Abhängigkeit von der Neigung des Tragelements (5) und der Neigungsrichtung des Tragelements (5) in einer gewünschten Fahrtrichtung steuerbar ist, wobei die Antriebsanordnung (6) vier Allseitenräder (11a, 11b, 11c, 11d) umfasst, von denen mindestens zwei Allseitenräder (11a, 11b, 11c, 11d) einen Kippwinkel (γa, γb, γc, γd) aufweisen und **dadurch gekennzeichnet, dass** ein Erhebungswinkel (βa, βb, βc, βd) zwischen einer von dem Mittelpunkt der Kugel (4) durch eine Drehachse (11ay, 11by, 11cy, 11dy) der jeweiligen Allseitenräder (11a, 11b, 11c, 11d) verlaufenden Linie und dem Äquator (4c) der Kugel (4) zwischen -20 und +65 Grad liegt.

2. Fahrzeug (1) nach Anspruch 1, **dadurch gekennzeichnet, dass** die Kippwinkel (γa, γb, γc, γd) von zwei gegenüberliegenden Allseitenrädern (11a, 11b, 11c, 11d) gleichläufig sind.

3. Fahrzeug (1) nach Anspruch 2, **dadurch gekennzeichnet, dass** alle Allseitenräder (11a, 11b, 11c, 11d) um einen Kippwinkel (γa, γb, γc, γd) gekippt sind und die Kippwinkel (γa, γb, γc, γd) der benachbarten Allseitenräder (11a, 11b, 11c, 11d) gegenläufig sind.

4. Fahrzeug (1) nach Anspruch 1 oder 2, **dadurch gekennzeichnet, dass** alle Allseitenräder (11a, 11b, 11c, 11d) um einen Kippwinkel (γa, γb, γc, γd) gekippt sind und die Kippwinkel (γa, γb, γc, γd) aller Allseitenräder (11a, 11b, 11c, 11d) gleichläufig sind.

5. Fahrzeug (1) nach einem der Ansprüche 1 bis 4, **dadurch gekennzeichnet, dass** der der Kippwinkel (γa, γb, γc, γd) relativ zu einer Hochachse (z) der Kugel (4) zwischen - 45 und +45 Grad, liegt, wobei der Bereich - 2 bis + 2 Grad ausgeschlossen ist.

6. Fahrzeug (1) nach einem der Ansprüche 1 bis 5, **dadurch gekennzeichnet, dass** der Kippwinkel (γa, γb, γc, γd) relativ zu einer Hochachse (z) der Kugel (4) im Bereich von - 5 bis -15 und + 5 bis + 15 Grad, liegt.

7. Fahrzeug (1) nach einem der Ansprüche 1 bis 6, **dadurch gekennzeichnet dass** die Allseitenräder (11a, 11b, 11c, 11d) relativ zu der Längsachse (x) der Kugel (4) um einen Anklappwinkel (δa, δb, δc, δd) angeklappt sind, wobei der Anklappwinkel (δa, δb, δc, δd) zwischen -110 und +110 Grad, vorzugsweise zwischen 0 und 45 Grad liegt.

8. Fahrzeug (1) nach einem der Ansprüche 1 bis 7, **dadurch gekennzeichnet, dass** ein Abstandswinkel (αab, αcd) zwischen den Allseitenrädern (11a und 11b, 11c und 11d) zwischen 80 und 110 Grad, vorzugsweise bei 90 Grad, liegt.

9. Fahrzeug (1) nach einem der Ansprüche 1 bis 8, **dadurch gekennzeichnet, dass** ein Erhebungswinkel (βa, βb, βc, βd) zwischen einer von dem Mittelpunkt der Kugel (4) bis durch einer Drehachse (11ay, 11by, 11cy, 11dy) der jeweiligen Allseitenräder (11a, 11b, 11c, 11d) verlaufenden Linie und dem Äquator (4c) der Kugel (4)zwischen 0 und 45 Grad, bevorzugt bei 0 Grad liegt.

10. Fahrzeug (1) nach einem der Ansprüche 1 bis 9, **dadurch gekennzeichnet, dass** das Tragelement (5) einen Deckelteil (5a), zwei Aufstandsteile (5b) und einen Ringteil (5c) umfasst, der Deckelteil (5a) den oberen Teil der Kugel (4) abdeckt und der untere Teil der Kugel (4) nach unten aus dem Ringteil (5c) hinausragt.

11. Fahrzeug (1) nach Anspruch 10, **dadurch gekennzeichnet, dass** auf den Aufstandsteilen (5b) Aufstandsflächen (10) für den Fahrer (2) angeordnet sind und die Aufstandsteile (5b) mit Aufstandsflächen (10) in Bezug auf die Kugel (4) gegenüber liegend angeordnet sind und dass an den Aufstandsflächen (10) des Tragelements (5) vier Sensoren (10b, 10c, 10d, 10e) angeordnet sind, die das Vorhandensein der Fußspitzen beziehungsweise der Fersen der Füße (2a) des Fahrers (2) registrieren und die gemessene Gewichtsveränderung an die Auswertesteuerung (17b) übergeben und/oder dass die Antriebsanordnung (6) an dem Ringteil (5c) des Tragelements (5) befestigt ist und die vier Allseitenräder (11a, 11b, 11c, 11d) jeweils an einer Drehachse (11ay, 11by, 11cy, 11dy) gelagert sind.

12. Fahrzeug (1) nach Anspruch 11, **dadurch gekennzeichnet, dass** jedes Allseitenrad (11a, 11b, 11c, 11d) direkt und ohne einer Zwischenschaltung eines Getriebes über einen Elektromotor (12a, 12b, 12c, 12d) angetrieben ist und jeder Elektromotor (12a, 12b, 12c, 12d) auf dem Ringteil (5c) des Tragelements (5) befestigt ist und, dass die Elektromotoren (12a, 12b, 12c, 12d) über mindestens eine wieder aufladbare Batterie (19) mit Energie versorgt sind und die Batterien (19) im Einbauraum (8) des Tragelements (5) um den Umfang der Kugel (4) gleichmäßig verteilt angeordnet sind.

13. Fahrzeug (1) nach einem der Ansprüche 1 bis 12, **dadurch gekennzeichnet, dass** an und unter dem Tragelement (5) Kreisel (16a, 16b, 16c) angeordnet sind, die die Neigung und Neigungsrichtung des Tragelements (5) messen und die gemessene Neigung und Neigungsrichtung an die Auswertesteuerung (17a, 17b) übergeben und, dass die Auswertesteuerung (17a, 17b) ein Balance-Steuerungsmodul umfasst, das einen Fahrer (2) bei der Ausbalancierung des Tragelements (5) in einer horizontale Lage im Raum unterstützt.

14. Fahrzeug (1) nach einem der Ansprüche 1 bis 13, **dadurch gekennzeichnet, dass** sich das Tragelement (5) über eine Stützanordnung (9) auf der Kugel (4) abstützt, wobei die Stützanordnung (9) mindestens ein nicht angetriebenes Allseitenrad (9a, 9b, 9c, 9d) umfasst.

15. Fahrzeug (1) nach einem der Ansprüche 1 bis 14, **dadurch gekennzeichnet, dass** das Fahrzeug (1) haltegrifflos ist.

## Claims

1. Vehicle (1) for the locomotion of a driver (2) comprising a ball (4) rolling on the ground (3), comprising a support element (5) which is unstably supported on the ball (4) and on which the driver (2) stands balancing during operation of the vehicle (1), comprising a drive arrangement (6) which is supported on the support element (5) and which drives the ball (4), and comprising a control (7) via which the drive arrangement (6) can be controlled in a desired direction of travel on the basis of the inclination of the support element (5) and the inclination direction of the support element (5), the drive arrangement (6) comprising four omnidirectional wheels (11a, 11b, 11c, 11d), of which at least two omnidirectional wheels (11a, 11b, 11c, 11d) have a tilt angle (γa, γb, γc, γd) and **characterised in that** an elevation angle (βa, βb, βc, βd) between a line running from the centre of the ball (4) through an axis of rotation (11ay, 11by, 11cy, 11dy) of the respective omnidirectional wheels (11a, 11b, 11c, 11d) and the equator (4c) of the ball (4) is between -20 and +65 degrees.

2. Vehicle (1) according to claim 1, **characterised in that** the tilt angles (γa, γb, γc, γd) of two opposite omnidirectional wheels (11a, 11b, 11c, 11d) are co-rotational.

3. Vehicle (1) according to claim 2, **characterised in that** all omnidirectional wheels (11a, 11b, 11c, 11d) are tilted by a tilt angle (γa, γb, γc, γd) and the tilt angles (γa, γb, γc, γd) of the adjacent omnidirectional wheels (11a, 11b, 11c, 11d) are counter-rotational.

4. Vehicle (1) according to claim 1 or 2, **characterised in that** all omnidirectional wheels (11a, 11b, 11c, 11d) are tilted by a tilt angle (γa, γb, γc, γd) and the tilt angles (γa, γb, γc, γd) of all omnidirectional wheels (11a, 11b, 11c, 11d) are co-rotational.

5. Vehicle (1) according to any of claims 1 to 4, **characterised in that** the tilt angle (γa, γb, γc, γd) relative to a vertical axis (z) of the ball (4) is between - 45 and +45 degrees, excluding the range - 2 to + 2 degrees.

6. Vehicle (1) according to any of claims 1 to 5, **characterised in that** the tilt angle (γa, γb, γc, γd) relative to a vertical axis (z) of the ball (4) is in the range of - 5 to -15 and + 5 to + 15 degrees.

7. Vehicle (1) according to any of claims 1 to 6, **characterised in that** the omnidirectional wheels (11a, 11b, 11c, 11d) are folded relative to the longitudinal axis (x) of the ball (4) by a folding angle (δa, δb, δc, δd), the folding angle (δa, δb, δc, δd) being between -110 and +110 degrees, preferably between 0 and 45 degrees.

8. Vehicle (1) according to any of claims 1 to 7, **characterised in that** a spacing angle (αab, αcd) between the omnidirectional wheels (11a and 11b, 11c and 11d) is between 80 and 110 degrees, preferably 90 degrees.

9. Vehicle (1) according to any of claims 1 to 8, **characterised in that** an elevation angle (βa, βb, βc, βd) between a line running from the centre of the ball (4) through an axis of rotation (11ay, 11by, 11cy, 11dy) of the respective omnidirectional wheels (11a, 11b, 11c, 11d) and the equator (4c) of the ball (4) is between 0 and 45 degrees, preferably 0 degrees.

10. Vehicle (1) according to any of claims 1 to 9, **characterised in that** the support element (5) comprises a cover part (5a), two stand-on parts (5b) and a ring part (5c), the cover part (5a) covers the upper part of the ball (4) and the lower part of the ball (4) projects downwards from the ring part (5c).

11. Vehicle (1) according to claim 10, **characterised in that** stand-on surfaces (10) for the driver (2) are arranged on the stand-on parts (5b) and the stand-on parts (5b) having stand-on surfaces (10) are arranged opposite one another in relation to the ball (4), and **in that** four sensors (10b, 10c, 10d, 10e) are arranged on the stand-on surfaces (10) of the support element (5), which sensors register the presence of the toes or heels of the feet (2a) of the driver (2) and transfer the measured change in weight to the evaluation control (17b), and/or **in that** the drive arrangement (6) is fastened to the ring part (5c) of the support element (5) and the four omnidirectional wheels (11a, 11b, 11c, 11d) are each mounted on an axis of rotation (11ay, 11by, 11cy, 11dy).

12. Vehicle (1) according to claim 11, **characterised in that** each omnidirectional wheel (11a, 11b, 11c, 11d) is driven directly and without the interposition of a gear via an electric motor (12a, 12b, 12c, 12d) and each electric motor (12a, 12b, 12c, 12d) is fastened to the ring part (5c) of the support element (5) and **in that** the electric motors (12a, 12b, 12c, 12d) are supplied with energy via at least one rechargeable battery (19) and the batteries (19) are arranged in the installation space (8) of the support element (5) evenly distributed around the circumference of the ball (4).

13. Vehicle (1) according to any of claims 1 to 12, **characterised in that** gyroscopes (16a, 16b, 16c) are arranged on and below the support element (5), which measure the inclination and inclination direction of the support element (5) and transfer the measured inclination and inclination direction to the evaluation control (17a, 17b) and **in that** the evaluation control (17a, 17b) comprises a balance control module which supports a driver (2) in balancing the support element (5) in a horizontal position in space.

14. Vehicle (1) according to any of claims 1 to 13, **characterised in that** the support element (5) is supported on the ball (4) via a support arrangement (9), the support arrangement (9) comprising at least one non-driven omnidirectional wheel (9a, 9b, 9c, 9d).

15. Vehicle (1) according to any of claims 1 to 14, **characterised in that** the vehicle (1) has no grab handle.

## Revendications

1. Véhicule (1) destiné au déplacement d'un conducteur (2) muni d'une boule (4) roulant sur un sol (3), ledit véhicule comprenant un élément porteur (5) qui vient en appui de manière instable sur la boule (4) et sur lequel le conducteur (2) se tient en équilibre pendant le fonctionnement du véhicule (1), un ensemble d'entraînement (6) qui vient en appui sur l'élément porteur (5) et qui entraîne la boule (4), et une commande (7) qui permet de commander l'ensemble d'entraînement (6) dans une direction de déplacement souhaitée en fonction de l'inclinaison de l'élément porteur (5) et de la direction d'inclinaison de l'élément porteur (5), l'ensemble d'entraînement (6) comprenant quatre roues omnidirectionnelles (11a, 11b, 11c, 11d), dont au moins deux roues omnidirectionnelles (11a, 11b, 11c, 11d) ont un angle d'inclinaison (γa, γb, γc, γd) et **caractérisé en ce qu'**un angle d'élévation (βa, βb, βc, βd) formé entre une ligne, partant du centre de la boule (4) et passant par un axe de rotation (11ay, 11by, 11cy, 11dy) des roues omnidirectionnelles respectives (11a, 11b, 11c, 11d), et l'équateur (4c) de la boule (4) est compris entre -20 et +65 degrés.

2. Véhicule (1) selon la revendication 1, **caractérisé en ce que** les angles d'inclinaison (γa, γb, γc, γd) de deux roues omnidirectionnelles opposées (11a, 11b, 11c, 11d) sont co-rotatifs.

3. Véhicule (1) selon la revendication 2, **caractérisé en ce que** toutes les roues omnidirectionnelles (11a, 11b, 11c, 11d) sont inclinées d'un angle d'inclinaison (γa, γb, γc, γd) et les angles d'inclinaison (γa, γb, γc, γd) des roues omnidirectionnelles adjacentes (11a, 11b, 11c, 11d) sont contrarotatifs.

4. Véhicule (1) selon la revendication 1 ou 2, **caractérisé en ce que** toutes les roues omnidirectionnelles (11a, 11b, 11c, 11d) sont inclinées d'un angle d'inclinaison (γa, γb, γc, γd) et les angles d'inclinaison (γa, γb, γc, γd) de toutes les roues omnidirectionnelles (11a, 11b, 11c, 11d) sont co-rotatifs.

5. Véhicule (1) selon l'une des revendications 1 à 4, **caractérisé en ce que** l'angle d'inclinaison (γa, γb, γc, γd) formé par rapport à un axe vertical (z) de la boule (4) est compris entre 45 et +45 degrés, la plage de -2 à +2 degrés étant exclue.

6. Véhicule (1) selon l'une des revendications 1 à 5, **caractérisé en ce que** l'angle d'inclinaison (γa, γb, γc, γd) formé par rapport à un axe vertical (z) de la boule (4) est dans la plage de -5 à -15 et de +5 à +15 degrés.

7. Véhicule (1) selon l'une des revendications 1 à 6, **caractérisé en ce que** les roues omnidirectionnelles (11a, 11b, 11c, 11d) sont inclinées par rapport à l'axe longitudinal (x) de la boule (4) avec un angle d'inclinaison (δa, δb, δc, δd). l'angle d'inclinaison (δa, δb, δc, δd) étant compris entre -110 et +110 degrés, de préférence entre 0 et 45 degrés.

8. Véhicule (1) selon l'une des revendications 1 à 7, **caractérisé en ce qu'**un angle d'écartement (αab, αcd) formé entre les roues omnidirectionnelles (11a et 11b, 11c et 11d) est compris entre 80 et 110 degrés, de préférence est de 90 degrés.

9. Véhicule (1) selon l'une des revendications 1 à 8, **caractérisé en ce qu'**un angle d'élévation (βa, βb, βc, βd) formé entre une ligne, partant du centre de la boule (4) et passant par un axe de rotation (11ay, 11by, 11cy, 11dy) des roues omnidirectionnelles respectives (11a, 11b, 11c, 11d), et l'équateur (4c) de la boule (4) est compris entre 0 et 45 degrés, de préférence est de 0 degré.

10. Véhicule (1) selon l'une des revendications 1 à 9, **caractérisé en ce que** l'élément porteur (5) comprend une partie couvercle (5a), deux parties de support (5b) et une partie annulaire (5c), la partie couvercle (5a) recouvrant la partie supérieure de la boule (4) et la partie inférieure de la boule (4) faisant saillie de la partie annulaire (5c) vers le bas.

11. Véhicule (1) selon la revendication 10, **caractérisé en ce que** des surfaces de support (10) destinées au conducteur (2) sont disposées sur les parties de support (5b), et les parties de support (5b) pourvues de surfaces de support (10) sont disposées en étant opposées par rapport à la boule (4), et **en ce que** quatre capteurs (10b, 10c, 10d, 10e) sont disposés sur les surfaces de support (10) de l'élément porteur (5), lesquels capteurs enregistrent la présence des orteils ou des talons des pieds (2a) du conducteur (2) et transmettent la variation de poids mesurée à la commande d'évaluation (17b), et/ou **en ce que** l'ensemble d'entraînement (6) est fixé à la partie annulaire (5c) de l'élément porteur (5), et les quatre roues omnidirectionnelles (11a, 11b, 11c, 11d) sont chacune montées sur un axe de rotation (11ay, 11by, 11cy, 11dy).

12. Véhicule (1) selon la revendication 11, **caractérisé en ce que** chaque roue omnidirectionnelle (11a, 11b, 11c, 11d) est entraînée, directement et sans l'interposition d'une transmission, par un moteur électrique (12a, 12b, 12c, 12d) et chaque moteur électrique (12a, 12b, 12c, 12d) est fixé à la partie annulaire (5c) de l'élément porteur (5) et **en ce que** les moteurs électriques (12a, 12b, 12c, 12d) sont alimentés en énergie par au moins une batterie rechargeable (19) et les batteries (19) sont disposées dans le compartiment (8) de l'élément porteur (5) de manière uniformément répartie autour de la circonférence de la boule (4).

13. Véhicule (1) selon l'une des revendications 1 à 12, **caractérisé en ce que** des gyroscopes (16a, 16b, 16c) sont disposés sur et sous l'élément porteur (5), lesquels mesurent l'inclinaison et la direction d'inclinaison de l'élément porteur (5) et transmettent l'inclinaison et la direction d'inclinaison mesurées à la commande d'évaluation (17a, 17b) et **en ce que** la commande d'évaluation (17a, 17b) comprend un module de commande d'équilibre qui aide un conducteur (2) à équilibrer l'élément porteur (5) dans une position horizontale dans l'espace.

14. Véhicule (1) selon l'une des revendications 1 à 13, **caractérisé en ce que** l'élément porteur (5) vient en appui sur la boule (4) par le biais d'un ensemble d'appui (9), l'ensemble d'appui (9) comprenant au moins une roue omnidirectionnelle non motrice (9a, 9b, 9c, 9d).

15. Véhicule (1) selon l'une des revendications 1 à 14, **caractérisé en ce que** le véhicule (1) est dépourvu de poignées.
